# FASCICULE DE BREVET EUROPEEN

(11) **EP 3 701 222 B1**
(45) Date de publication et mention de la délivrance du brevet: **23.03.2022**
(21) Numéro de dépôt: 18803753.5
(22) Date de dépôt: 29.10.2018
(51) Int. Cl.: G01B 15/02, G01B 15/04, B07C 5/12, B07C 5/34

(54) **PROCEDE ET DISPOSITIF DE MESURE DE DIMENSIONS PAR RAYONS X SUR DES RECIPIENTS EN VERRE VIDES DEFILANT EN LIGNE**
VERFAHREN UND VORRICHTUNG ZUR MESSUNG VON ABMESSUNGEN DURCH RÖNTGENSTRAHLEN AUF IN EINER LINIE VERLAUFENDEN LEEREN GLASBEHÄLTERN
METHOD AND DEVICE FOR MEASURING DIMENSIONS BY X-RAYS ON EMPTY GLASS CONTAINERS RUNNING IN A LINE

(30) Priorité: 27.10.2017 FR 1760173
(43) Date de publication de la demande: 02.09.2020
(73) Titulaire: Tiama, 69390 Vourles (FR)
(72) Inventeur: COSNEAU, Laurent, 69510 Soucieu-En-Jarrest (FR); COLLE, Olivier, 69600 Oullins (FR)
(74) Mandataire: Cabinet Beau de Loménie
(86) Numéro de dépôt international: PCT/FR2018/052683
(87) Numéro de publication internationale: WO 2019/081876

(56) Documents cités:
- WO-A1-2010/025539
- WO-A2-2010/092368
- DE-A1- 19 756 697
- DE-A1-102014 103 137
- JP-A- S60 260 807
- US-A- 5 864 600
- US-A1- 2006 058 974
- US-A1- 2009 262 891

## Description

La présente invention concerne le domaine technique de l'inspection de récipients vides en verre, tels que par exemple des bouteilles, des pots, des flacons en vue de déceler d'éventuels défauts dimensionnels.

La présente invention concerne plus précisément la mesure de dimensions sur des récipients vides en verre, défilant en ligne après leur fabrication en vue de déterminer si de tels récipients respectent des critères dimensionnels requis.

Après leur fabrication, les récipients en verre vides font l'objet de divers contrôles dimensionnels.

Ainsi, il est connu qu'il existe un risque que les récipients présentent une ou plusieurs zones localisées de mauvaise répartition de verre affectant l'esthétique ou plus grave, la résistance mécanique des récipients.

Pour mesurer l'épaisseur de la paroi d'un récipient, il est connu par exemple par le brevet EP 0 320 139 ou le brevet EP 0 584 673, une méthode dite par triangulation consistant à projeter un faisceau lumineux sur la paroi du récipient avec un angle d'incidence non nul, et à collecter les faisceaux lumineux réfléchis par la surface extérieure et la surface intérieure de la paroi. Ces réflexions lumineuses sur ces deux surfaces se font dans les directions spéculaires des faisceaux incidents, c'est-à-dire de manière symétrique au faisceau incident par rapport à la normale à la surface au point d'impact du faisceau incident. Les rayons réfléchis par les surfaces intérieure et extérieure de la paroi sont récupérés par une lentille afin d'être envoyés sur un capteur de lumière linéaire. L'épaisseur de la paroi du récipient est mesurée en fonction de la séparation, au niveau du capteur de lumière, entre les faisceaux réfléchis par les surfaces intérieure et extérieure de la paroi. Le récipient est entraîné en rotation selon un tour pour mesurer son épaisseur selon l'une de ses sections droites transversales.

Une alternative à la technique précédente de mesure optique par triangulation est la mesure par le procédé dit « optique confocal à chromatisme » telle que décrite par la demande DE 10 2007 044 530. Ce procédé consiste à envoyer un faisceau lumineux présentant un codage chromatique, à récupérer les faisceaux réfléchis par les faces intérieure et extérieure, sur un capteur permettant d'analyser la longueur d'onde desdits faisceaux réfléchis, et à déterminer l'épaisseur en fonction des longueurs d'ondes desdits faisceaux réfléchis.

De même, le brevet EP 2 676 127 décrit un dispositif permettant la mesure de l'épaisseur de la paroi de verre des récipients en plusieurs points de mesure distribués sur une région d'inspection de manière superposée selon une hauteur déterminée du récipient prise selon l'axe central. Le procédé d'inspection vise à déceler des défauts de répartition de matière dans des récipients transparents ayant un axe central et une paroi délimitée entre une face extérieure et une face intérieure.

Les mesures optiques décrites précédemment sont très utilisées car sans contact et assez rapides, mais elles nécessitent toutes la mise en rotation des récipients pour mesurer l'épaisseur sur une circonférence. En effet, ces techniques ont en commun la projection d'un faisceau de lumière et la récupération de la lumière réfléchie par les deux surfaces intérieure et extérieure de la paroi. Seules certaines incidences et directions d'observation correspondantes sont alors possibles, en particulier en raison de la réflexion spéculaire. Les récipients étant généralement cylindriques, la mesure n'est possible que pour une région étroite située autour de l'axe optique des capteurs. Il n'est pas possible donc d'utiliser ces principes pour une mesure de récipients défilant en ligne sur une ligne de convoyage au cours de leur fabrication.

De façon supplémentaire, la mise en rotation des récipients nécessaire à la mesure optique d'épaisseur est coûteuse. En effet, la mise en rotation impose l'utilisation d'un équipement de manutention complexe. Il faut en effet arrêter les récipients qui arrivent en translation sur le convoyeur, les entraîner en rotation durant la mesure et les remettre en mouvement de translation sur le convoyeur. Les récipients sont alors mis en contact avec des guides, des galets, des étoiles. Les réglages sont fastidieux et impliquent le recours à des équipements adaptés à chaque format de récipients (équipements variables). Enfin les cadences sont limitées à 300-400 récipients par minute alors que la production actuelle de récipients en verre sur les lignes les plus performantes dépasse actuellement les 700 récipients par minute. Il faut donc dans certains cas un double équipement de mesure.

De manière classique, les récipients en verre vides font également l'objet en dehors des mesures d'épaisseur de leur paroi, de mesures au niveau du goulot ou de la bague du récipient (diamètres interne/externe, étanchéité, hauteur) et du col du récipient (diamètre intérieur, profil intérieur, brochage).

Afin de réaliser de telles inspections, il est connu d'utiliser un ou plusieurs dispositifs comportant chacun une tête d'inspection destinée à être abaissée soit sur une distance précise en fonction de la nature du récipient, soit pour venir en contact avec le récipient, soit pour être en appui sur le récipient le temps de l'inspection. De manière classique, une telle inspection est réalisée à l'aide d'une machine présentant soit un convoyeur linéaire adapté pour maintenir les récipients dans des positions précises, soit de préférence un convoyeur à étoiles, avec un mouvement circulaire indexé pour placer les récipients en relation avec différents postes de contrôle. Chaque tête d'inspection est déplacée selon un mouvement vertical alternatif pour un convoyeur à étoiles tandis que pour un convoyeur linéaire, la tête d'inspection présente de façon supplémentaire, un déplacement horizontal.

Le brevet FR 2 818 748 décrit un dispositif d'inspection comportant une tête montée sur une glissière horizontale qui est fixée sur un chariot déplacé selon des mouvements alternatifs verticaux par une courroie montée entre une poulie folle et une poulie menée par un servomoteur. L'un des inconvénients d'un tel dispositif est la masse déplacée relativement importante, ce qui limite la vitesse et l'accélération de déplacement de la tête d'inspection. Il s'ensuit que la cadence d'inspection des récipients est limitée, ce qui représente un inconvénient majeur dans le processus de production en ligne de récipients. Un autre inconvénient d'un tel dispositif connu apparaît lorsque la tête d'inspection est destinée à venir en contact avec le récipient. En effet, la course de la tête d'inspection n'est pas définie à cause de la dispersion de hauteur des récipients et des défauts qui influent sur cette course comme ceux ne permettant pas à la tête d'inspection de descendre lors d'une opération de brochage. Aussi, compte tenu de l'indétermination de cette course et de la masse embarquée, il peut survenir un choc important entre la tête d'inspection et le récipient, ce qui est susceptible d'entraîner la détérioration du récipient et/ou de la tête d'inspection.

Le brevet GB 1 432 120 décrit un dispositif pour inspecter les récipients comportant plusieurs postes de contrôle dont l'un vise à contrôler la conformité dimensionnelle des bagues et des cols des récipients. Ce poste de contrôle comporte un équipage mobile entraîné par un système de motorisation selon un mouvement alternatif par rapport au bâti du dispositif, dans une direction de déplacement parallèle à l'axe de symétrie des récipients. Cet équipage mobile est équipé d'un calibre externe de contrôle de l'extérieur de la bague des récipients et d'un calibre interne de contrôle de l'intérieur de la bague et du col des récipients. Le dispositif décrit par ce document GB 1 432 120 possède les mêmes inconvénients que le dispositif d'inspection décrit par le brevet FR 2 818 748.

Le brevet FR 2 965 344 en allégeant la partie mobile, en combinant une détection de contact et une commande dynamique du mouvement vertical, rend la solution nettement plus rapide, mais toutefois les mouvements mécaniques de manutention des récipients, les équipements variables et le contact des calibres avec les récipients restent des inconvénients majeurs.

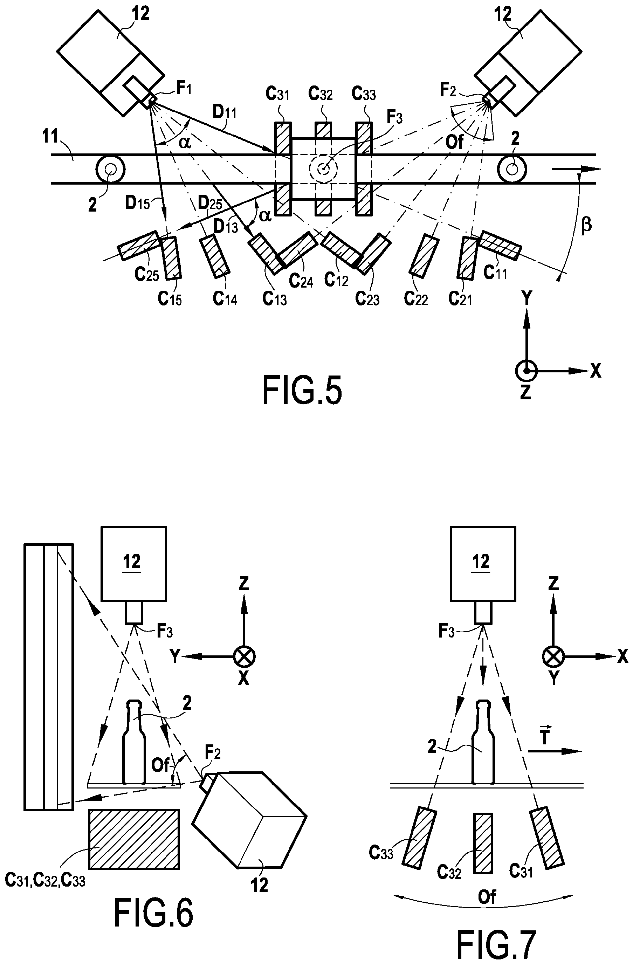

Dans le domaine de la détection d'un volume de liquide contenu dans un récipient, la demande de brevet WO 2010/025539 décrit un système et un procédé d'inspection par rayons X. Le principe de détection de ce document est de connaître l'épaisseur de liquide traversé à partir de l'image radiographique (repère 512 sur la Fig. 5a et 592 sur la Fig. 5b) afin d'en déduire le niveau de remplissage (ménisque 520) et donc le volume total de liquide à l'intérieur du récipient. A cet effet, le procédé propose de soustraire de l'image radiographique, l'atténuation due aux épaisseurs de verre traversées 508 et 506.

Or il n'est pas possible dans la radiographie projetée selon la direction 502-504 de connaître l'atténuation due au verre et celle due au liquide contenu. Pour remédier à ce problème, ce document propose de créer un modèle théorique tridimensionnel du récipient à partir de son image radiographique bidimensionnelle. De l'image radiographique, est soustrait l'atténuation du modèle théorique tridimensionnel du récipient pour déduire des atténuations mesurées, uniquement les atténuations du liquide permettant d'en déduire approximativement le volume de liquide.

Selon l'exemple de réalisation décrit par ce document, le modèle théorique tridimensionnel est obtenu à partir d'une radiographie réalisée selon une seule direction de projection. La radiographie est analysée pour connaître le profil bidimensionnel du récipient projeté selon une direction de projection. Le profil bidimensionnel du récipient sert à obtenir la forme théorique tridimensionnelle du récipient soit à partir d'une bibliothèque de modèles enregistrés soit par révolution du profil bidimensionnel compte tenu de la forme de symétrie axiale supposée des récipients.

Selon un autre exemple de réalisation, ce document suggère de prendre des images radiographiques selon des directions différentes pour améliorer la précision de la détermination de la position du ménisque du liquide. Selon cet exemple, le procédé vise à déterminer la position du ménisque du liquide selon une première direction radiographique, la position du ménisque du liquide selon une deuxième direction radiographique et à retenir la position du ménisque du liquide pour la position moyenne du ménisque du liquide.

Quel que soit l'exemple de réalisation, le modèle théorique tridimensionnel construit selon l'enseignement de ce document ne correspond pas au récipient réel objet de la radiographie. Des mesures notamment d'épaisseurs réalisées sur un tel modèle théorique tridimensionnelle sont donc fausses. Par ailleurs, il est à noter que les seules mesures d'épaisseur éventuellement possibles sont celles selon une direction orthogonale à la direction de projection radiographique. Ainsi, les dimensions comme l'épaisseur de verre dans les directions non orthogonales à la direction de projection radiographiques sont exactement les mêmes que les épaisseurs dans le profil bidimensionnel, donc dans les directions orthogonales aux projections radiographiques. Cette hypothèse qui est vérifiée uniquement pour un récipient parfait ou théorique comme supposé dans ce document, est bien entendue fausse pour un récipient sur lequel des mesures précises sont à réaliser.

La demande de brevet JP S60 260807 propose de mesurer l'épaisseur des parois d'un tube se déplaçant en translation selon l'axe du tube, à l'aide de mesures par rayons X issus d'un ou de plusieurs foyers à chacun desquels sont associés des capteurs. Les foyers et les capteurs sont positionnés pour réaliser des projections radiographiques selon un plan orthogonal à la direction de déplacement du tube. Les projections radiographiques sont donc coplanaires dans un pian de projection qui est orthogonal à l'axe de symétrie du tube. La direction de ces projections radiographiques fait un angle droit (90°) par rapport à la direction de déplacement. Cette technique ne permet pas de connaître complètement les surfaces interne et externe du tube. Le procédé décrit par cette demande de brevet permet de mesurer uniquement l'épaisseur cumulée des deux parois du tube dans la direction de projection, sans reconstruction d'un modèle tridimensionnel d'un tube qui permettrait de réaliser des mesures précises dans les autres directions.

De même, le brevet US 5 864 600 décrit un procédé pour déterminer le niveau de remplissage d'un récipient à l'aide d'une source de rayons X et d'un capteur disposés transversalement de part et d'autre du convoyeur de transport des récipients. Ce procédé permet de mesurer l'épaisseur cumulée du matériau. Ce système ne permet pas d'effectuer des mesures pour une surface orientée non transversalement car ce document ne prévoit pas une modélisation tridimensionnelle des récipients.

La demande de brevet US 2009/0262891 décrit un système pour détecter par rayons X, des objets placés dans des bagages déplacés en translation par un convoyeur. Ce système comporte des tubes générateurs pulsés ou un capteur ayant une grande dimension parallèlement au sens de défilement. Ce document prévoit une méthode de reconstruction de l'objet qui ne donne pas satisfaction car l'absence de projections dans la direction de déplacement ne permet pas la mesure de dimensions dans la direction orthogonale au sens de déplacement. Le manque de projections radiographiques dans un secteur angulaire ne permet pas de réaliser un modèle numérique adapté pour assurer des mesures précises.

La demande de brevet DE 197 56 697 décrit un dispositif présentant les mêmes inconvénients que la demande de brevet US 2009/0262891.

La demande de brevet WO 2010/092368 décrit un dispositif de visualisation d'un objet se déplaçant en translation par rayons X à l'aide d'une source de radiation et de trois capteurs linéaires.

La demande de brevet US 2006/0058974 décrit un système d'imagerie de radiographie numérique permettant d'acquérir des images numériques en particulier de réservoirs ou de canalisation et de transformer ces images numériques en une carte d'épaisseur absolue caractérisant l'objet inspecté. Les données numériques générées à partir de chaque élément sensible sont calibrées, par exemple, en corrigeant les variations des chemins de rayons X entre la source de rayons X et le détecteur, en corrigeant les variations de la réponse en fréquence spatiale, en corrigeant les variations du profil géométrique de l'objet soumis à l'inspection et en corrigeant le matériau contenu dans et/ou autour de l'objet. Cette technique ne peut pas être mise en oeuvre pour le contrôle dimensionnel de récipients défilant en ligne.

La demande de brevet DE 10 2014 103137 décrit un procédé pour déterminer des caractéristiques géométriques sur une pièce à usiner à l'aide d'un système de détecteurs tomodensitométriques, constitué d'une source de rayons X, d'un détecteur plan et d'un axe mécanique pour faire tourner la pièce ou pour faire tourner la source de rayons X et le détecteur. Par exemple, chaque pièce est chargée sur un plateau tournant puis subit une rotation sur au moins 180° puis est déchargée pour le contrôle d'une autre pièce. Le procédé acquiert des images radiographiques lors de la rotation et assure une représentation de la surface en utilisant un modèle de la surface. La reconstruction se fait par comparaison itérative des images mesurées avec des images simulées sur un modèle théorique de la pièce, le modèle géométrique théorique de la pièce étant modifié jusqu'à ce que les images mesurées lors d'une rotation de la pièce et les images simulées tout au long de la rotation soient sensiblement identiques. Un tel procédé évite la mise en œuvre d'étapes de reconstruction des données de volume pour réduire le temps de calcul.

L'analyse des solutions techniques antérieures conduit à constater qu'il apparaît le besoin de disposer d'une nouvelle technique permettant d'effectuer des mesures dimensionnelles sur des récipients sans altérer leur intégrité tout en conservant une grande vitesse de convoyage à ces récipients.

La présente invention vise à satisfaire ce besoin en proposant une nouvelle technique de mesure sans contact permettant de réaliser des mesures dimensionnelles précises sur des récipients défilant en ligne à haute cadence.

Pour atteindre cet objectif, l'objet de l'invention concerne un procédé de mesure de dimensions d'au moins une région à inspecter de récipients vides en verre d'une série présentant chacun une paroi formant un goulot et un corps et délimitée par une surface interne et une surface externe, le procédé consiste à :
- choisir au moins une région à inspecter comprenant au moins une partie du goulot et/ou une partie du corps du récipient ;
- transporter les récipients posés sur leur fond dans un plan de convoyage selon une trajectoire plane avec une direction matérialisée par un vecteur de déplacement, ces récipients engendrant un volume de convoyage au cours de leur déplacement ;
- positionner, de part et d'autre de la région à inspecter, au moins un foyer d'un tube générateur de rayons X et des capteurs d'images sensibles aux rayons X et exposés chacun aux rayons X issus d'un foyer associé, ces rayons X ayant traversé au moins la région à inspecter produisant sur chaque capteur d'images une projection radiographique selon la direction de projection ;
- acquérir à l'aide des capteurs d'images pour chaque récipient au cours de son déplacement, au moins trois images radiographiques de la région inspectée, obtenues d'au moins trois projections radiographiques de la région à inspecter dont les directions de projection sont différentes ;
- construire à l'aide d'un système informatique, un modèle géométrique numérique de la région inspectée pour chaque récipient, à partir d'au moins trois images radiographiques, le modèle géométrique numérique de la région à inspecter contenant les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une direction de projection ;
- déduire au moins un diamètre interne du goulot mesuré sur le modèle géométrique numérique dans un plan non orthogonal à une direction de projection , et/ou au moins une épaisseur de la paroi du corps mesurée sur le modèle géométrique numérique dans un plan non orthogonal à une direction de projection.

De plus, le procédé selon l'invention peut comporter en outre en combinaison au moins l'une et/ou l'autre des caractéristiques additionnelles suivantes :
- le modèle géométrique numérique de la région à inspecter contenant les coordonnées tridimensionnelles d'un ensemble de points est constitué par :
   - au moins deux points tridimensionnels de l'espace appartenant chacun à une surface interne et/ou externe de la paroi du récipient et situés dans un plan non orthogonal à une direction de projection, et non parallèle à la direction de déplacement ;
   - et/ou au moins une représentation surfacique des surfaces interne et externe de la paroi du récipient contenant des points n'appartenant pas à un plan orthogonal à une direction de projection, et n'appartenant pas à un plan parallèle à la direction de déplacement ;
   - et/ou au moins une section de la région à inspecter, selon un plan différent d'un plan orthogonal à une direction de projection et différent d'un plan parallèle à la direction de déplacement ;
- le procédé consiste à choisir comme région à inspecter, au moins une zone définie s'étendant entre deux plans parallèles au plan de convoyage;
- le procédé consiste à choisir comme région à inspecter, une zone comprenant le goulot et une partie de corps du récipient et à déterminer un modèle géométrique numérique de la région à inspecter contenant les coordonnées tridimensionnelles d'un ensemble de points appartenant aux surfaces interne et externe de la paroi du récipient dans la région inspectée, pour déduire au moins un diamètre interne du goulot et une épaisseur de la paroi de verre du corps du récipient ;
- le procédé consiste à positionner d'un côté de la trajectoire, un foyer duquel est issu un faisceau de rayons X divergent d'ouverture > 120° ou au moins deux foyers desquels sont issus des faisceaux de rayons X divergents dont la somme des ouvertures est supérieure ou égale à 120° ;
- le procédé consiste à disposer au moins un foyer dans le plan de convoyage;
- le procédé consiste à disposer d'un côté d'un plan sécant du volume de convoyage, orthogonal au plan de convoyage, un foyer duquel est issu un faisceau de rayons X divergent, de sorte que son faisceau traverse le plan sécant et la région à inspecter ;
- le procédé consiste à disposer du côté opposé par rapport au plan sécant, au moins un capteur d'images associé audit foyer pour recevoir les rayons X issus dudit foyer ;
- le procédé consiste à disposer d'un côté du plan de convoyage, un foyer duquel est issu un faisceau de rayons X divergent, de sorte que son faisceau traverse le plan de convoyage ;
- le procédé consiste à disposer du côté opposé par rapport au plan de convoyage, au moins un capteur d'images associé audit foyer pour recevoir les rayons X issus dudit foyer ;
- le procédé consiste à acquérir à l'aide des capteurs d'images, pour chaque récipient au cours de son déplacement, au moins deux images radiographiques de la région inspectée correspondant à des directions de projection définissant un angle utile supérieur ou égal à 45° et inférieur ou égal à 90° et, avantageusement supérieur ou égal à 60° et inférieur ou égal à 90° ;
- le procédé consiste à acquérir à l'aide des capteurs d'images, pour chaque récipient au cours de son déplacement, au moins une image radiographique de la région inspectée correspondant à une direction de projection ayant un angle d'ouverture avec la direction de déplacement compris entre 10° et 60° ;
- le procédé consiste à réaliser et acquérir des projections radiographiques de la région inspectée d'un récipient de manière que les rayons X issus du ou des foyers et atteignant les capteurs d'images ne traversent pas d'autres récipients ;
- le procédé consiste à acquérir à l'aide des capteurs d'images, pour chaque récipient au cours de son déplacement, des images radiographiques issues d'entre trois et quarante, et de préférence d'entre quatre et quinze projections radiographiques de la région à inspecter de directions différentes ;
- les capteurs d'images sont de type linéaire comportant chacun un réseau linéaire d'éléments sensibles aux rayons X, distribués selon une droite de support définissant avec le foyer associé, un plan de projection contenant la direction de projection, ces capteurs d'images étant disposés de manière que :
   - au moins m éléments sensibles de chacun de ces capteurs d'images reçoivent la projection radiographique de la région à inspecter par le faisceau de rayons X issu du foyer associé ;
   - les plans de projection pour les différents capteurs d'images sont distincts entre eux et non parallèles au plan de convoyage ;
   - on acquiert à l'aide de chacun des au moins trois capteurs d'images linéaires, à chaque déplacement incrémental de chaque récipient selon la trajectoire, des images linéaires radiographiques de la région à inspecter selon un nombre choisi afin que pour chaque récipient, l'ensemble de la région à inspecter se trouve représentée complètement dans l'ensemble des images linéaires radiographiques ;
   - on analyse pour chaque récipient, les au moins trois ensembles d'images linéaires radiographiques de la région à inspecter ;
- le procédé consiste à mettre à la disposition du système informatique, un modèle géométrique a priori de la région à inspecter de la série de récipients, obtenu par :
   - le modèle numérique de conception par ordinateur des récipients de la série ;
   - ou le modèle numérique géométrique obtenu à partir de la mesure d'un ou de plusieurs récipients de la même série par un dispositif de mesure ;
   - ou le modèle numérique géométrique généré par le système informatique à partir de valeurs saisies et/ou de dessins réalisés et/ou de formes sélectionnées par un opérateur sur une interface homme machine du système informatique ;
- le procédé consiste à mettre à la disposition du système informatique la valeur du coefficient d'atténuation du verre constituant les récipients.

Un autre objet de l'invention est de proposer une installation de mesure automatique de dimensions linéaires d'au moins une région à inspecter de récipients vides en verre présentant chacun une paroi formant un goulot et un corps et délimitée par une surface interne et une surface externe, l'installation comportant :
- un dispositif de transport des récipients dans une direction matérialisée par un vecteur de déplacement, selon une trajectoire sensiblement rectiligne dans un plan de convoyage, les récipients parcourant un volume de convoyage étendu dans la direction ;
- au moins un foyer d'un tube générateur de rayons X situé en dehors du volume traversé, et créant un faisceau divergent de rayons X dirigé pour traverser au moins une région à inspecter comprenant au moins une partie du goulot et/ou une partie du corps du récipient ;
- au moins trois capteurs d'images, situés en dehors du volume de convoyage, de manière à recevoir des rayons X issus d'un foyer associé, le ou les foyers et les capteurs d'images étant disposés de manière que chaque capteur d'images reçoive la projection radiographique de la région à inspecter par les rayons issus du foyer lorsque le récipient traverse ces rayons, les directions de projection de ces projections radiographiques étant différentes entre elles ;
- un système d'acquisition relié aux capteurs d'images, de manière à acquérir pour chaque récipient au cours de son déplacement, au moins trois images radiographiques de la région à inspecter, obtenues d'au moins trois projections radiographiques de la région à inspecter, avec des directions de projection différentes ;
- et un système informatique analysant les au moins trois images radiographiques, issues d'au moins les trois projections radiographiques différentes, de manière à construire pour chaque récipient, un modèle géométrique numérique de la région à inspecter, ledit modèle géométrique numérique contenant les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une direction de projection, chaque modèle géométrique numérique permettant de déduire au moins un diamètre interne du goulot mesuré sur le modèle dans un plan non orthogonal à une direction de projection, et/ou au moins une épaisseur de la paroi du corps mesurée sur le modèle dans un plan non orthogonal à une direction de projection.

De plus, l'installation selon l'invention peut comporter en outre en combinaison au moins l'une et/ou l'autre des caractéristiques additionnelles suivantes :
- au moins deux foyers de production de rayons X, positionnés séparément en deux positions distinctes et au moins trois capteurs d'images, sensibles aux rayons X et positionnés de manière que :
   - chaque foyer émet son faisceau à travers au moins la région à inspecter pour atteindre au moins un capteur d'images associé ;
   - chaque capteur d'images est associé à un foyer et reçoit les rayons X issus dudit foyer après avoir traversé la région à inspecter ;
- au moins un foyer duquel est issu un faisceau de rayons X divergent d'ouverture supérieure ou égale à 120° ou au moins deux foyers desquels sont issus des faisceaux de rayons X divergents dont la somme des ouvertures est supérieure ou égale à 120° ;
- au moins un foyer disposé dans le plan de convoyage ;
- d'un côté d'un plan sécant au volume de convoyage et orthogonal au plan de convoyage, un foyer duquel est issu un faisceau de rayons X divergent, de sorte que son faisceau traverse le plan sécant et la région à inspecter ;
- du côté opposé par rapport au plan sécant, au moins un capteur d'images associé audit foyer pour recevoir les rayons X issus dudit foyer ;
- d'un côté du plan de convoyage, un foyer duquel est issu un faisceau de rayons X divergent, de sorte que son faisceau traverse le plan de convoyage;
- du côté opposé par rapport au plan de convoyage, au moins un capteur d'images associé audit foyer pour recevoir les rayons X issus dudit foyer ;
- au moins un foyer et deux capteurs d'images sont disposés de manière que les directions de projection de la région inspectée qu'ils reçoivent possèdent entre elles un angle utile supérieur ou égal à 45° et inférieur ou égal à 90° et, avantageusement supérieur ou égal à 60° et inférieur ou égal à 90° ;
- au moins un foyer et un capteur d'images sont disposés de manière que, lorsqu'un récipient traverse le champ des capteurs d'images, la direction de projection de la région inspectée sur le capteur d'images fait un angle d'ouverture avec la direction de déplacement compris entre 10° et 60° ;
- les capteurs d'images et les foyers sont disposés de sorte que les rayons X issus du ou des foyers et atteignant les capteurs d'images et traversant la région d'un récipient ne traversent pas d'autres récipients à la fois ;
- entre un et quatre foyers, issus d'un ou de plusieurs tubes générateurs de rayons X ;
- le nombre et la disposition des capteurs d'images et des foyers associés, sont tels que pour chaque récipient au cours de son déplacement, les projections radiographiques de la région à inspecter sur les capteurs d'images présentent entre trois et quarante, et de préférence entre quatre et quinze directions de projection différentes ;
- les capteurs d'images sont de type linéaire et comportent chacun un réseau linéaire d'éléments sensibles aux rayons X, distribués selon une droite de support définissant avec le foyer associé, un plan de projection contenant la direction de projection, ces capteurs d'images étant disposés de manière que :
   - au moins m éléments sensibles de chacun de ces capteurs d'images reçoivent la projection radiographique de la région à inspecter par le faisceau de rayons X issu du foyer associé ;
   - les plans de projection pour les différents capteurs d'images sont distincts entre eux et non parallèles au plan de convoyage ;
      au moins trois capteurs d'images linéaires ont leurs droites de support parallèles entre elles ;
      - au moins trois capteurs d'images linéaires ont leurs droites de support orthogonales au plan de convoyage ;
      - un foyer est positionné d'un côté du plan de convoyage, et selon l'invention au moins un capteur d'images linéaire associé, est positionné du côté opposé au foyer par rapport au plan de convoyage et de manière que sa droite support soit parallèle au plan de convoyage ;

Selon l'invention, l'installation comprend :
- un dispositif de mise à disposition pour le système informatique, du coefficient d'atténuation du verre constituant les récipients ;
- un dispositif de mise à disposition pour le système informatique, d'un modèle géométrique a priori de la région à inspecter qui est une mémoire de masse, un réseau informatique filaire ou hertzien ou une interface homme machine ;
- un dispositif de mise à disposition pour le système informatique, de valeurs et/ou de tolérances pour les dimensions du goulot et/ou de valeur minimale d'épaisseur de verre pour la paroi du corps, et/ou d'au moins un modèle géométrique de référence d'un récipient.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue schématique de dessus montrant une installation permettant la mesure par rayons X, de dimensions sur des récipients défilant en ligne.
La **Figure 2** est une vue schématique en perspective de côté montrant une installation permettant la mesure par rayons X, de dimensions sur un récipient.
La **Figure 3** est une vue schématique en coupe montrant une partie d'un récipient inspecté.
La **Figure 4** est une vue schématique en perspective montrant le volume traversé ou engendré par les récipients au cours de leur déplacement linéaire.
La **Figure 5** est une vue schématique de dessus montrant un exemple de réalisation d'une installation conforme à l'invention comportant trois foyers générateurs de rayons X.
La **Figure 6** est une vue schématique en élévation transversale de l'installation illustrée à la **Fig. 5****.**
La **Figure 7** est une vue schématique en élévation latérale de l'installation illustrée à la **Fig. 5****.**
Les **Figures 8** et **9** sont des vues schématiques explicitant la définition de l'angle utile entre deux directions de projection.
Les **Figures 10** et **11** sont des vues schématiques en perspective montrant le positionnement de capteurs d'images par rapport au déplacement des récipients à inspecter.
La **Figure 12** est une vue d'un exemple de réalisation d'une installation conforme à l'invention mettant en œuvre des capteurs d'images matricielles.
La **Figure 13** est une vue d'une matrice d'éléments sensibles aux rayons X sur laquelle apparaît deux zones distinctes correspondant à deux capteurs d'images matricielles.
La **Figure 14** est une vue d'un modèle géométrique numérique d'un récipient obtenu selon le procédé conforme à l'invention, lorsque la région d'inspection comprend le goulot.
La **Figure 15** présente une section verticale et quatre sections horizontales du modèle géométrique numérique d'un récipient obtenu selon le procédé conforme à l'invention et sur lequel sont représentées des mesures de dimensions.

En préliminaire, quelques définitions des termes utilisés dans le cadre de l'invention sont données ci-après.

Un foyer **Fj** d'un tube générateur de rayons X est une source de rayons X ponctuelle, de préférence un « micro foyer », de diamètre par exemple entre 0.01 mm et 1 mm, créant un faisceau divergent de rayons X. Il est possible d'utiliser tout type de source de rayons X ponctuelle ou quasi ponctuelle.

Un élément sensible est un élément sensible aux rayons X, autrement dit une surface élémentaire, de dimension par exemple 0,2 × 0,2 mm ou 0,02 × 0,02 mm, convertissant les rayons X qu'elle reçoit en un signal électrique. Généralement, un scintillateur convertit les rayons X en lumière visible puis un capteur photo-électrique convertit la lumière visible en signal électrique. Des techniques de conversion directe des rayons X en signal électrique existent également. Un pixel désigne une valeur élémentaire d'un point d'une image échantillonnée, caractérisé par son niveau de gris entre 0 et une valeur maximale. Par exemple pour une image numérique 12 bits, un pixel prend des valeurs numériques entre 0 et 4 095.

Un système de lecture ou d'acquisition d'images radiographiques comporte une ou plusieurs surfaces sensibles aux rayons X, c'est-à-dire des surfaces comprenant des éléments sensibles convertissant les rayons X en un signal électrique pour être transmis à un système d'analyse mis en œuvre classiquement par un ordinateur et désigné par système informatique dans la suite de la description. Les signaux issus d'un ensemble d'éléments sensibles appartenant à une même zone de surface sensible, acquis par le dispositif d'acquisition et transmis ensemble au système informatique, constituent une image radiographique. Pour être analysées par le système informatique, les images radiographiques sont de préférence converties en images radiographiques numériques soit au plus près de la surface sensible, soit à distance au plus près du système informatique.

Les faisceaux de rayons X issus d'un foyer **Fj** traversent au moins une région inspectée, et forment sur une surface sensible, la projection radiographique de la région inspectée, qu'on appelle parfois l'image radiante et qui contient l'information d'atténuation des rayons X par le matériau traversé.

On appelle capteur d'images **Cji,** une zone de surface sensible aux rayons X qui reçoit la projection radiographique de la région inspectée. Un capteur d'images **Cji** est exposé aux rayons X issus d'un foyer **Fj** associé. Le capteur d'images convertit cette projection radiographique en une image radiographique de la région inspectée. Lorsque la zone de surface sensible contient une ligne d'éléments photosensibles, l'image radiographique transmise est linéaire, composée d'une ligne de pixels formant un tableau de valeurs à une dimension. Lorsque la zone de surface sensible contient une matrice d'éléments photosensibles, l'image radiographique transmise est matricielle, composée d'une matrice de pixels formant un tableau de valeurs à deux dimensions.

La direction de projection **Dji** est la direction orientée ou le vecteur partant du foyer **Fj** pour passer par le centre du capteur d'images **Cji,** c'est-à-dire par le centre d'une zone sensible aux rayons X qui reçoit la projection radiographique de la région inspectée au moment de l'acquisition durant le déplacement du récipient entre le foyer et le capteur d'images. Pour un couple capteur d'images -foyer associé, la direction de projection est le vecteur issu du foyer atteignant le milieu du capteur d'images. Le positionnement des capteurs d'images est tel que la surface sensible n'est pas parallèle à la direction de projection. Il peut être avantageux dans certains cas que la surface sensible du capteur d'images soit orthogonale à la direction de projection définie avec le foyer associé. Mais ce n'est pas obligatoire, par exemple si une surface sensible contient plusieurs zones sensibles qui coopèrent pour chaque prise d'image, avec plusieurs foyers différents, donc selon des directions de projection différentes.

Les directions de projection **Dji** de projections radiographiques sont différentes si les directions de projection **Dji** prises deux à deux font entre elles un angle minimum au moins égal à 5°.

Une zone de surface sensible contenant une seule ligne d'éléments sensibles constitue un capteur d'images linéaires, qui comporte un réseau linéaire d'éléments sensibles, distribués selon un segment de droite de support. Selon cette définition, une colonne ou une ligne appartenant à une surface sensible matricielle, acquise et transmise séparément par le dispositif d'acquisition est considérée comme un capteur d'images linéaires. Plusieurs zones de surface sensibles d'une même surface et contenant chacune une seule ligne de pixels différentes constituent donc plusieurs capteurs d'images linéaires. La direction de projection associée à l'image radiographique linéaire obtenue est donc la direction partant du foyer et passant par le milieu du segment de droite de support à l'instant de l'acquisition de l'image.

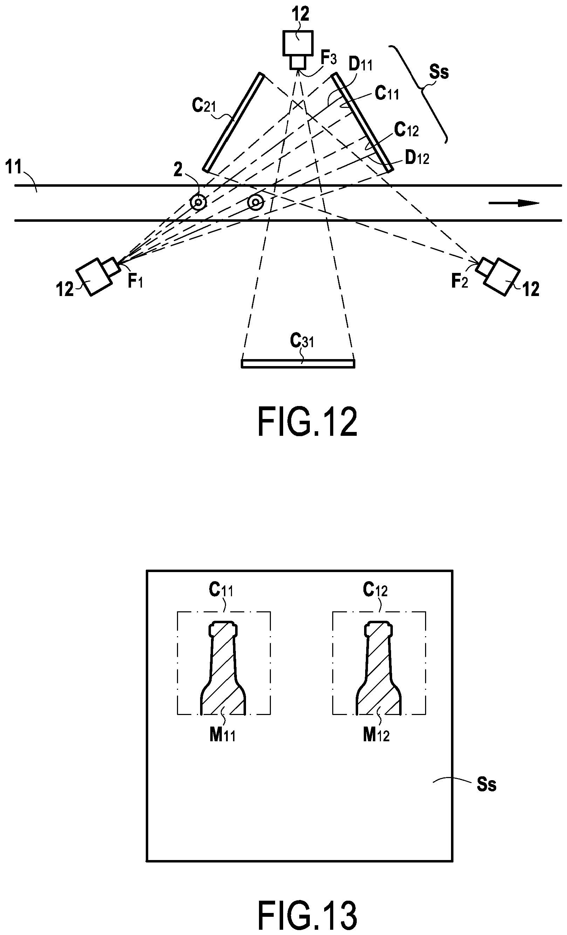

Une zone de surface sensible qui contient une matrice d'éléments sensibles constitue un capteur d'images matricielles, qui comporte un réseau matriciel d'éléments sensibles aux rayons X, distribués selon une matrice. Comme illustré à la **Fig. 12****,** selon cette définition, une zone de surface sensible matricielle **C11, C12,** qui appartient à une plus grande surface sensible **Ss,** et qui est acquise et transmise séparément par le dispositif d'acquisition est un capteur d'images matricielles. Plusieurs zones de surface sensible matricielles **C11, C12** d'une même surface, acquises et transmises séparément par le dispositif d'acquisition constituent donc plusieurs capteurs d'images matricielles fournissant des images radiographiques différentes respectivement **M11, M12 (****Fig. 13****).** La direction **D11, D12** de projection associée à l'image radiographique matricielle respectivement **M11, M12** est la direction partant du foyer **F1** et passant par le milieu de la zone **C11, C12** de surface sensible matricielle, à l'instant de l'acquisition de l'image. Il est possible donc que les capteurs d'images **C11, C12** soient des régions non disjointes activées successivement dans le temps.

Bien entendu l'homme du métier peut utiliser une technologie de capteur matriciel basé sur un amplificateur de brillance ou bien une « caméra à reprise d'écran » dans laquelle une plaque de scintillateur reçoit l'image radiante, la convertit en lumière visible, l'image visible à l'arrière du scintillateur étant photographiée par une caméra visible munie si besoin d'un objectif.

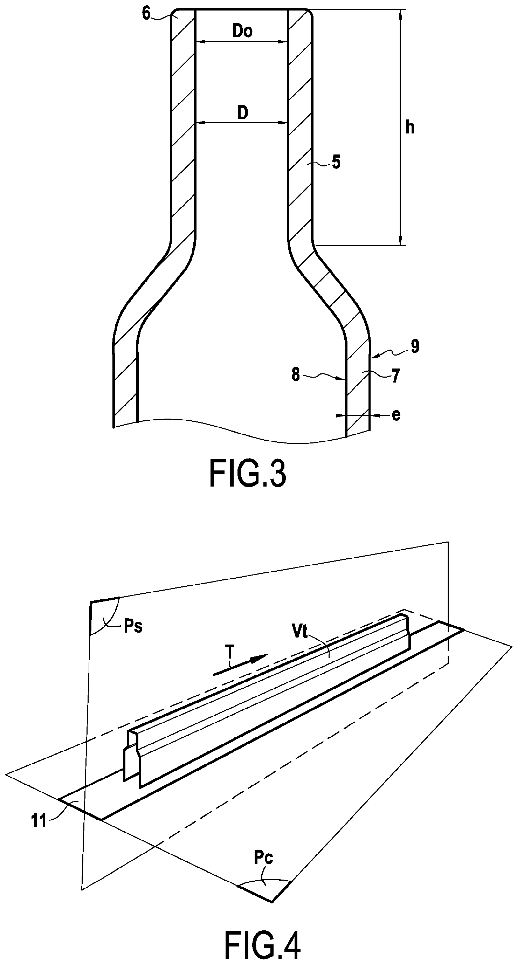

Tel que cela ressort des **Figures,** l'objet de l'invention concerne une installation **1** permettant la mise en œuvre d'un procédé pour réaliser des mesures de dimensions sur des récipients vides en verre **2.** De manière classique, un récipient **2** est un objet creux comportant un fond **3** raccordé à un talon ou jable à partir duquel s'élève un corps **4** se prolongeant par une épaule raccordée à un goulot ou col **5** terminé par une bague **6** délimitant l'embouchure permettant de remplir ou de vider le récipient. Ainsi comme illustré à la **Fig. 3****,** un récipient **2** présente une paroi de verre **7** délimitée intérieurement par une surface interne **8** et extérieurement par une surface externe **9.** La paroi **7** possède entre la surface interne **8** et la surface externe **9** une épaisseur **e.** Le goulot **5** présente un diamètre interne **D** définit par la surface interne de la paroi.

Selon une caractéristique avantageuse de réalisation, au moins une région du récipient est choisie pour être inspectée de manière à pouvoir réaliser des mesures de dimensions dans cette région du récipient, correspondant à une caractéristique dimensionnelle de la région à inspecter. Typiquement, la région à inspecter peut comprendre au moins le goulot **5** du récipient et la mesure d'une caractéristique dimensionnelle de cette région à inspecter correspond au moins au diamètre interne **D** du goulot. De même, la région à inspecter peut comprendre au moins une portion de la paroi du corps **4** comprise entre le jable et l'épaule et délimitée par exemple par deux plans parallèles au plan de pose du récipient, et la mesure d'une caractéristique dimensionnelle de cette région à inspecter correspond à l'épaisseur **e** de la paroi de verre comprise entre les surfaces interne **8** et externe **9** délimitant cette paroi **7.** L'invention est donc tout particulièrement adaptée à mesurer des dimensions en relation avec la surface interne de la paroi au niveau du goulot et/ou du corps du récipient. Ainsi, le procédé selon l'invention permet de mesurer au moins soit un diamètre interne du goulot soit une épaisseur de la paroi de verre soit un diamètre interne du goulot et une épaisseur de la paroi de verre

De même, la région à inspecter peut correspondre à une partie de la paroi **7** comprenant le corps, le jable ou le fond du récipient. La région à inspecter peut correspondre aussi à la totalité du récipient **2.** Les dimensions mesurées sont des épaisseurs de paroi de verre au corps, au fond, au jable, des hauteurs, des diamètres internes ou externes, des largeurs par exemple pour des filets sur le goulot. Ces mesures permettent aussi de déduire une caractéristique dimensionnelle de la région à inspecter comme par exemple l'ovalisation du récipient ou un récipient à col penché.

Le procédé selon l'invention est mis en œuvre pour des récipients **2** en verre, c'est-à-dire pour des séries d'objets manufacturés composés d'un seul matériau à savoir le verre. Il est considéré que le coefficient d'atténuation **µ** du verre est unique, c'est-à-dire ayant la même valeur en tout point d'une région à inspecter des récipients et de préférence constant dans le temps et identique pour les récipients de la série. Ces conditions sont remplies car la composition du verre est stable dans des fours produisant plusieurs centaines de tonnes de verre par jour. Il est à noter que le coefficient d'atténuation **µ** du verre est en toute rigueur une propriété spectrale **µ(λ)** selon la longueur d'onde **λ** ou l'énergie des rayons X. Cette caractéristique n'est pas nécessairement prise en compte dans le procédé selon l'invention dans la mesure où la source de rayons X ayant une composition spectrale émise propre, il est possible de considérer que l'atténuation **µ** est une caractéristique du verre pour le spectre de la source choisie. L'homme du métier saura par ailleurs réaliser l'invention en utilisant toute méthode de prise en compte de l'atténuation spectrale des faisceaux. Il saura aussi adapter le spectre émis, par exemple en le durcissant.

En conséquence, l'atténuation de l'air peut être considérée négligeable devant celle du verre. L'atténuation d'un faisceau de rayons X traversant le récipient ne dépendra que d'une part, de ladite atténuation constante pour le spectre de rayons X émis, et d'autre part, de l'épaisseur cumulée de verre traversée. Alternativement, il est considéré que l'épaisseur d'air traversée est grande et uniforme pour tous les faisceaux, elle peut donc être considérée comme connue. L'atténuation due à l'air peut être soustraite de l'atténuation totale mesurée. Ainsi le niveau de gris dans chaque image radiographique, éventuellement corrigé, dépend uniquement et directement de l'épaisseur de verre traversée cumulée totale. Il est alors possible de déterminer avec précision des surfaces frontières qui sont les transitions entre l'air et le verre.

Ainsi, le système informatique prend en compte le coefficient d'atténuation du verre des récipients en cours d'inspection pour cette opération de calcul. Avantageusement, l'installation **1** comporte un dispositif de mise à disposition pour le système informatique, du coefficient d'atténuation du verre des récipients, par exemple connu par les analyses du verre dans le four. Ce dispositif de mise à disposition peut être réalisé par une mémoire de masse, une interface homme machine ou par un réseau informatique filaire ou hertzien.

L'installation **1** comporte également un dispositif **11** de transport des récipients **2** dans un plan de convoyage **Pc,** selon une trajectoire plane, avec une direction matérialisée par un vecteur **T** de déplacement. De préférence, la trajectoire est sensiblement rectiligne. Classiquement, le dispositif de transport **11** est un convoyeur à bande transporteuse ou à chaînes assurant une translation linéaire des récipients en position dressée c'est-à-dire avec le fond **3** des récipients en appui sur le convoyeur pour s'établir dans le plan de convoyage **Pc.**

L'installation selon l'invention permet la mise en œuvre d'un procédé pour réaliser de manière automatique, des mesures de dimensions linéaires sur des récipients **2** se déplaçant en défilement à haute cadence. L'invention concerne un contrôle dit « en ligne » d'une série de récipients, après une étape de transformation ou fabrication, afin de contrôler la qualité des récipients ou du procédé de transformation ou de fabrication.

Le procédé fonctionne pour une cadence de défilement d'un flux de récipients **2.** Idéalement, l'installation **1** est capable de traiter la production à la cadence de production, par exemple de 600 récipients par minute.

Toutefois, la durée de calcul peut excéder l'intervalle entre deux récipients. De même, les temps d'exposition des capteurs d'images et de lecture peuvent être trop longs. Si le flux le plus rapide ne peut pas être traité par une seule installation conforme à l'invention, alors plusieurs installations peuvent être mises en œuvre en parallèle contrôlant chacune une partie de la production. Ainsi il est possible de diviser le flux de production en deux ou trois flux parallèles inspectés par deux ou trois installations selon l'invention. Evidemment, l'intérêt économique de l'invention est atteint si le nombre de flux et donc d'installations selon l'invention reste faible.

L'invention apporte une amélioration considérable grâce à la mesure de la surface interne et de l'épaisseur des parois, sans contact et en défilement des récipients, les opérations complexes de mise en rotation des articles telles que mises en œuvre dans des carrousels sont supprimées. Cela permet également une cartographie d'épaisseur sur toute la périphérie et sur toute la hauteur de la région inspectée. Pour le contrôle du goulot, l'invention permet des mesures dans le goulot, pour tous les récipients de la production, tandis que l'art antérieur ne réalise qu'un test de conformité binaire par gabarit ou de mesures sur quelques échantillons prélevés. Ces mesures permettent donc une observation des dérives du procédé de fabrication.

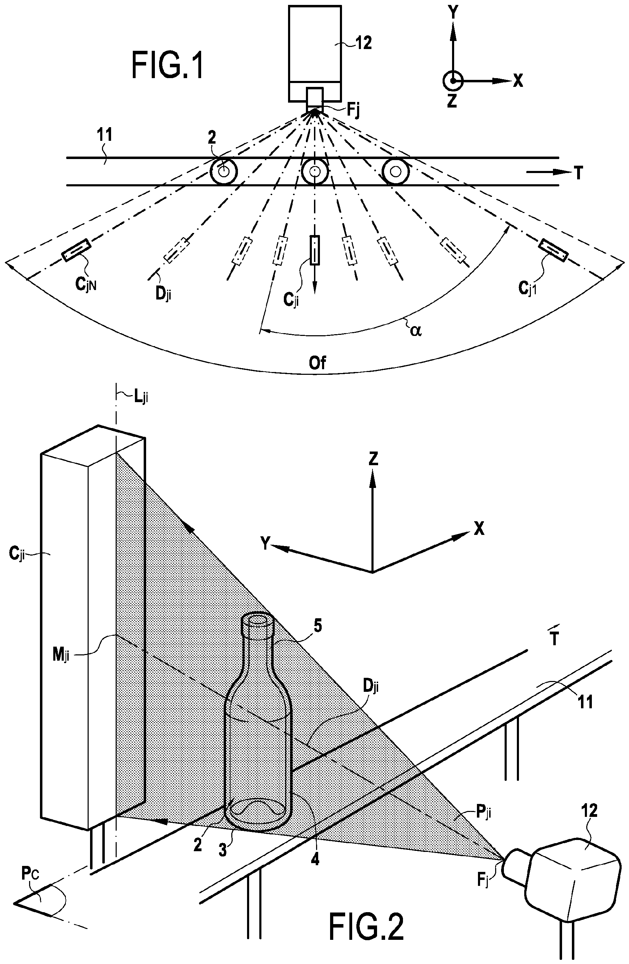

Tel que cela ressort plus précisément des **Fig. 1** et **2****,** la direction de déplacement des récipients **2** s'établit selon un axe horizontal **X** d'un repère **X, Y, Z** comportant un axe vertical **Z** perpendiculaire à l'axe horizontal **X** et un axe transversal **Y** perpendiculaire à l'axe vertical **Z** et à l'axe horizontal **X,** et **X** et **Y** étant dans un plan parallèle au plan de convoyage **Pc** qui est sensiblement horizontal.

Tel que cela ressort plus précisément de la **Fig. 4****,** au cours de leur déplacement en translation, les récipients **2** génèrent ou traversent un volume dit de convoyage **Vt.** Le plan **Ps** est le plan sécant du volume de convoyage **Vt,** orthogonal au pian de convoyage **Pc** et parallèle à la direction de déplacement **T.** Par exemple, un plan médian sépare le volume en deux sous-volumes égaux. Le plan **Ps** est un plan vertical dans la mesure où le plan de convoyage est généralement horizontal.

L'installation **1** comporte également comme illustré aux **Fig. 1** et **2****,** au moins un foyer **Fj** (avec j variant de 1 à k) d'un tube **12** générateur de rayons X créant un faisceau divergent de rayons X dirigé pour traverser le volume de convoyage **Vt** et plus précisément traverser au moins la région à inspecter du récipient **2.** Il est à noter que le récipient **2** est en verre de sorte que la région à inspecter du récipient est réalisée dans un matériau dont le coefficient d'absorption en transmission est homogène pour un rayonnement X donné.

L'installation **1** comporte également au moins trois capteurs d'images **Cji** (avec i variant de 1 à N, N supérieur ou égal à 3) sensibles aux rayons X et situés de manière à être exposés aux rayons X issus d'un foyer **Fj** associé et ayant traversé le volume de convoyage **Vt** et plus précisément, au moins la région à inspecter du récipient **2.** Bien entendu, le tube **12** et les capteurs d'images **Cji** sont situés en dehors du volume de convoyage **Vt** pour permettre le libre déplacement des récipients dans ce volume. Classiquement, les tubes **12** générateurs de rayons X et les capteurs d'images **Cji** sont placés dans une enceinte étanche aux rayons X.

Les faisceaux de rayons X issus d'un foyer **Fj** associé audit capteur d'images **Cji,** traversent au moins la région inspectée, et forment sur le capteur d'images, la projection radiographique de la région inspectée, selon une direction de projection **Dji (****Fig. 1** et **2****).** La direction de projection **Dji** est la direction orientée du vecteur partant du foyer **Fj** pour passer par le centre **Mji** du capteur d'images **Cji.** Le ou les foyers **Fj** et les capteurs d'images **Cji** sont disposés de manière que chaque capteur d'images reçoive une projection radiographique de la région à inspecter selon une direction de projection de la région à inspecter.

L'installation **1** comporte également un système d'acquisition relié aux capteurs d'images **Cji,** de manière à acquérir pour chaque récipient **2** au cours de son déplacement, au moins trois projections radiographiques de la région à inspecter présentant des directions différentes. Il est rappelé que la direction de projection associée à l'image radiographique obtenue est la direction partant du foyer et passant par le milieu de la zone de la surface sensible du capteur d'images, au moment de l'acquisition de l'image. Ainsi, les au moins trois projections radiographiques ont des directions de projections qui font deux à deux, un angle entre-elles.

Le système d'acquisition est relié à un système informatique non représenté mais de tous types connus en soi. Selon une caractéristique avantageuse de réalisation, le système informatique enregistre à l'aide des capteurs d'images **Cji,** pour chaque récipient au cours de son déplacement, des images radiographiques issues d'un nombre déterminé de projections radiographiques de la région à inspecter selon des directions de projection différentes. Typiquement, le nombre de directions de projection **Dji** différentes est compris entre trois et quarante, et de préférence entre quatre et quinze. Selon une variante avantageuse de réalisation, l'installation **1** comporte entre trois et quarante capteurs d'images **Cj.** Selon une variante préférée de réalisation, l'installation **1** comporte entre quatre et quinze capteurs d'images **Cji.**

Comme cela sera expliqué en détail dans la suite de la description, le système informatique est programmé pour analyser, pour chaque récipient, les au moins trois images radiographiques issues des au moins trois projections radiographiques de directions différentes de manière à déterminer, pour chaque récipient, un modèle géométrique numérique de la région à inspecter contenant les coordonnées tridimensionnelles d'un ensemble de points appartenant à la paroi du récipient dans la région inspectée. Plus précisément, chaque modèle géométrique numérique contient les coordonnées tridimensionnelles d'un ensemble de points appartenant au moins à la surface interne de la paroi du récipient et de préférence, à la surface interne et à la surface externe de la paroi du récipient. La détermination des coordonnées tridimensionnelles de ces points permet de réaliser des mesures dimensionnelles du récipient pour la région inspectée, à savoir au moins un diamètre interne du goulot ou au moins une épaisseur de la paroi de verre du corps **4** du récipient ou au moins un diamètre interne du goulot et une épaisseur de la paroi de verre du corps du récipient.

La détermination des coordonnées tridimensionnelles de ces points et la réalisation des mesures dimensionnelles peuvent être réalisées de toute manière appropriée par les techniques connues d'analyse de données géométriques tridimensionnelles.

D'une manière générale, le modèle géométrique numérique de la région à inspecter contient les coordonnées tridimensionnelles d'un ensemble de points, calculées à partir des au moins trois images radiographiques de la région à inspecter. Cet ensemble de points appartient à la surface interne et/ou externe de la paroi du récipient, avec au moins deux points tridimensionnels de l'espace situés dans un plan non orthogonal à une direction de projection **Dji.**

Avantageusement, le modèle géométrique numérique de la région à inspecter contenant les coordonnées tridimensionnelles d'un ensemble de points est constitué par :
- au moins deux points tridimensionnels de l'espace appartenant chacun à une surface interne et/ou externe de la paroi du récipient et situés dans un plan non orthogonal à une direction de projection **Dji** et non parallèle à la direction **T** de déplacement ;
- et/ou au moins une représentation surfacique des surfaces interne et externe de la paroi du récipient contenant des points n'appartenant pas à un plan orthogonal à une direction de projection **Dji,** et n'appartenant pas à un plan parallèle à la direction **T** de déplacement ;
- et/ou au moins une section de la région à inspecter, selon un plan différent d'un plan orthogonal à une direction de projection **Dji** et différent d'un plan parallèle à la direction **T** de déplacement.

Les mesures dimensionnelles s'effectuent ensuite selon l'une des méthodes décrites dans la suite de la description.

D'une manière générale, les mesures dimensionnelles réalisées sur le modèle géométrique numérique de chaque récipient concernent au moins un diamètre interne du goulot mesuré sur ledit modèle dans un plan non orthogonal à une direction de projection **Dji,** et/ou au moins une épaisseur de la paroi du corps mesurée sur ledit modèle dans un plan non orthogonal à une direction de projection **Dji.**

Un exemple préféré de réalisation consiste à déterminer, pour chaque récipient, un modèle géométrique numérique représentant la surface interne et la surface externe du récipient dans la région à inspecter.

Selon cet exemple, l'analyse numérique des images radiographiques relatives à chaque récipient permet de construire pour chacun de ces récipients, un modèle géométrique numérique tridimensionnel. En d'autres termes, pour chaque récipient inspecté par radiographie, un modèle géométrique numérique tridimensionnel est construit à partir des images radiographiques correspondantes audit récipient. Eventuellement, ce modèle géométrique numérique peut être simplement un empilement de modèles géométriques numériques bidimensionnels. La réalisation d'un modèle géométrique numérique est la façon - en termes mathématique, graphique et de structure de données - dont des récipients tridimensionnels sont représentés et manipulés sous forme numérique dans une mémoire d'un système informatique.

La modélisation peut être volumique. Le récipient mono-matériau peut donc être représenté par des voxels dont la valeur représente une quantité de matériau. Le voxel peut être plein, partiellement plein ou vide de matériau (dans ce cas c'est de l'air). Le modèle géométrique volumique peut être analysé pour localiser les frontières du récipient et ensuite pour mesurer des dimensions linéaires telles que des longueurs ou des épaisseurs. Il peut aussi être transformé en modèle surfacique, c'est-à-dire dans lequel sont modélisées des surfaces frontières du récipient.

Il est possible d'obtenir un modèle surfacique directement à partir des images radiographiques c'est-à-dire sans passer par le calcul d'un modèle volumique.

Dans les modélisations surfaciques, un récipient est défini par au moins une surface tridimensionnelle. Une surface tridimensionnelle correspond à la frontière entre la matière du récipient et l'environnement extérieur (généralement l'air), ce qui permet d'appréhender les notions d'intérieur et d'extérieur du récipient. Généralement les surfaces tridimensionnelles se modélisent de plusieurs manières telles que par modélisation polygonale, par courbes ou surfaces paramétriques (cylindres, cônes, sphères, splines, ...) ou par subdivision de surfaces. A l'aide d'un maillage de polyèdres, par exemple des triangles, les surfaces tridimensionnelles des récipients sont représentées par des ensembles de facettes planes connexes par leurs arêtes.

Une section d'un récipient tridimensionnel est son intersection avec un plan. La section des surfaces tridimensionnelles sont des courbes bidimensionnelles dans le plan de section. La connaissance de ces courbes bidimensionnelles dans une succession de plans de coupe permet la reconstruction des surfaces tridimensionnelles.

Afin d'opérer des mesures de longueurs, il existe plusieurs approches.

Dans une première méthode volumique, il est possible de parcourir un modèle volumique suivant une droite ou un faisceau de droites et déterminer les voxels de frontière matière / air.

Dans une deuxième méthode surfacique, il est possible de calculer un segment dont les extrémités sont les intersections d'une droite avec la surface frontière matière/air d'un modèle surfacique. Les algorithmes résolvent assez bien les problèmes topologiques. Les points d'intersection sont uniques. Enfin, une méthode mixte consiste à transformer le modèle volumique en modèle surfacique, puis à appliquer la deuxième méthode.

Une troisième méthode consiste à déterminer dans un plan de coupe, la distance entre deux points d'une ou de deux courbes bidimensionnelles, toute courbe étant une frontière entre matière et air.

Un point tridimensionnel est un point dont sont connues les coordonnées dans l'espace tridimensionnel, dans un repère quelconque.

Ces trois méthodes précédentes sont des exemples de détermination d'une distance entre deux points tridimensionnels, pour déterminer une mesure de dimension linéaire.

L'objectif de l'invention est de réaliser des mesures plus complètes que celles rendues possibles par de simples images radiographiques bidimensionnelles. En effet, il est aisé à l'aide d'un capteur d'images matricielles d'obtenir une image radiographique bidimensionnelle correspondant à une projection de la région inspectée et de mesurer des dimensions dans un plan orthogonal à la direction de projection dit « plan projeté ». De même, il est aisé à l'aide d'un capteur d'images linéaires d'obtenir une image radiographique bidimensionnelle correspondant à une projection en éventail (plans parallèles) de la région inspectée obtenue par juxtaposition des lignes d'images successives acquises durant le déplacement dans la direction de déplacement T, et de mesurer des dimensions dans un plan projeté, qui est parallèle à la direction de déplacement. En revanche, selon l'invention, on peut mesurer des dimensions linéaires selon des directions qui ne sont ni contenues dans les plans projetés, ni parallèles aux plans projetés. Le procédé selon l'invention consiste en effet lors du traitement d'une combinaison des images radiographiques selon au moins trois directions de projection différentes, à reconstruire et mesurer des dimensions selon pratiquement toutes les directions. Ceci est possible par toute méthode permettant la détermination de points tridimensionnels dans l'espace appartenant à une surface frontière incluse dans la région à inspecter du récipient. La reconstruction d'un modèle tridimensionnel de la région à inspecter, de type surfacique ou volumique ou à base de plans de coupe, est une méthode possible. En effet, selon l'invention on peut soit indirectement à partir d'un modèle surfacique ou volumique ou de plans de coupes, soit directement, déterminer au moins deux points tridimensionnels, voire de préférence des nuages de points tridimensionnels, répartis selon des directions non mesurables uniquement dans les images radiographiques bidimensionnelles.

Le modèle géométrique numérique est donc composé d'éléments géométriques tels que points, segments, surfaces, volumes élémentaires, calculés à partir des projections radiographiques, en considérant pour calculer chaque élément, l'atténuation d'au moins certains rayons X ayant traversés ce point sur le récipient vide réel, dans le but que le modèle géométrique numérique soit une représentation fidèle de la géométrie du récipient vide réel, incluant des déformations par rapport à un récipient vide idéal. Autrement dit, les coordonnées des d'éléments géométriques sont déterminées en considérant que lesdites coordonnées ont modifié les projections radiographiques, même lorsque ces d'éléments géométriques ne sont distinguables dans aucune des projections radiographiques 2D. Les mesures de dimensions sur le modèle géométrique numérique donnent donc des informations sur les dimensions de chaque récipient vide modélisé, à partir d'éléments géométriques distinguables dans aucune des projections radiographiques.

Le récipient en verre étant composé d'un matériau unique, donc avec un coefficient d'atténuation constant ou considéré comme tel, il est avantageux de déterminer son modèle géométrique numérique sous la forme de surfaces. Il est possible de déterminer et représenter dans le modèle géométrique numérique par exemple, la surface interne du goulot du récipient. La région inspectée contient selon cet exemple, le goulot 3 et s'étend donc entre le plan de surface de bague 6 et un plan qui lui est parallèle. On peut alors mesurer le diamètre interne du goulot D. Plus exactement, on peut mesurer plusieurs diamètres internes du goulot **D.** En choisissant une hauteur donnée par exemple en choisissant un plan de coupe parallèle à la surface de la bague ou au fond du récipient, on peut mesurer plusieurs diamètres de 0 à 360° dans ce plan. Ainsi, il est possible de déterminer le diamètre à l'ouverture **Do** (ou embouchure), par exemple à 3 mm sous l'embouchure en positionnant un pian de coupe 3 mm sous la surface de bague. Il est aussi possible de déterminer un diamètre **D** minimum sur toute la hauteur **h** de la surface interne du goulot pour remplacer la mesure par brochage.

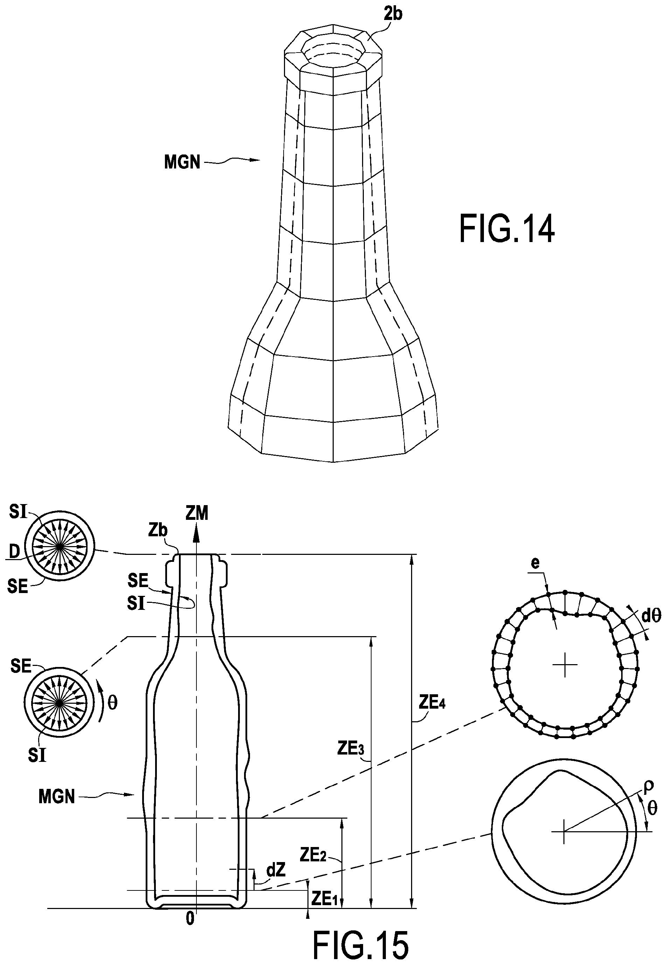

Étant donnée la géométrie des récipients, il est plus simple de raisonner en coordonnées cylindriques. Au moment de réaliser les mesures sur un récipient, le procédé a réalisé un modèle géométrique numérique **MGN** représentant précisément au moins la région à inspecter dudit récipient correspondant au goulot par exemple comme illustré à la **Fig. 14** ou comme illustré à la **Fig. 15****,** une section verticale ou quatre sections horizontales du modèle géométrique numérique **MGN** du récipient.

On peut définir un repère de coordonnées cylindriques **ZM, ρ**, **θ** sur ce modèle géométrique numérique, avec l'axe **ZM** qui correspond à l'axe de symétrie dudit modèle de récipient, avec la hauteur **Z** selon l'axe **ZM** qui est égale à zéro lorsqu'elle est située dans le plan de pose. On peut dans le cas d'un récipient cylindrique ou conique définir **ZM** comme un axe orthogonal au plan de pose et passant par le centre du fond du récipient. De fait, le modèle géométrique numérique **MGN** d'un récipient comprend des surfaces internes **SI** et externes **SE.**

Selon une variante avantageuse pour la mesure du goulot de chaque récipient, le procédé consiste à mesurer sur le modèle géométrique numérique **MGN,** comme diamètres intérieurs **D** du goulot, les longueurs d'un ensemble de segments de droite, lesdits segments étant :
- orthogonaux à l'axe de symétrie **ZM** du modèle géométrique numérique,
- croisant l'axe de symétrie **ZM** du modèle géométrique numérique,
- situés à au moins deux hauteurs distinctes **ZG1, ZG2** dans le goulot du modèle géométrique numérique ;
- de directions réparties angulairement autour de l'axe de symétrie **ZM** du modèle géométrique numérique, avec au moins un segment non orthogonal aux directions de projection **Dij** ;
- pour chaque hauteur, en nombre supérieur au nombre de directions de projections **Dij** ;
   - et chaque segment reliant deux points qui appartiennent à la surface interne du goulot du modèle géométrique numérique et qui sont opposés par rapport à l'axe de symétrie **ZM** du modèle géométrique numérique du récipient.

Il faut noter que les segments ne croiseraient exactement l'axe de symétrie **ZM** au sens mathématique, que dans le cas de récipients idéaux de révolution parfaite. Ceci n'est évidemment pas le cas puisque le modèle géométrique numérique représente un récipient réel.

Il est rappelé qu'un objectif principal de l'invention est de réaliser en ligne, c'est-à-dire lorsque les récipients sont en translation rapide sur un convoyeur, et sans le contact d'un capteur mécanique ou pneumatique, plusieurs mesures qui sont nécessaires, selon les types de production, pour garantir la conformité du goulot.

Le brochage est la possibilité d'introduire dans le goulot un cylindre de diamètre minimum, par exemple la canule de remplissage. Pour mesurer le brochage selon l'invention, l'on peut déterminer le diamètre minimum sur plusieurs hauteurs selon l'axe de symétrie **ZM** et selon plusieurs directions selon des angles **θ** variant de 0 à 360°. On peut également simuler l'introduction d'un cylindre, à l'intérieur de la surface interne du modèle géométrique numérique de chaque récipient, au niveau de son goulot, et déterminer le diamètre maximum que le cylindre atteint lorsqu'il est inscrit, donc en contact sans pouvoir grossir davantage, à l'intérieur de la surface interne du goulot ou d'un ensemble de points de ladite surface interne. Pour mesurer le profil de débouchage de chaque récipient, l'on peut à partir de la surface de bague **Zb** du modèle géométrique numérique, puis pas à pas sur une profondeur **Zb-p** déterminée à partir de la surface de bague, calculer à chaque hauteur **Z** *Z* ∈ [*Zb - p*; *Zb*] une donnée statistique des diamètres comme par exemple le diamètre **D** minimum à chaque profondeur ou hauteur **Z,** soit min*_{θ} **D***, en déduire une fonction de profil comme le diamètre minimum en fonction de la profondeur soit *profil*(*Z*) = min*_{θ}* Ø (*Z*) ,et comparer ce profil à des profils de référence.

Pour mesurer le diamètre **Do** à l'ouverture, par exemple à une profondeur de 3 mm, on peut vérifier que tous les diamètres **D** entre la surface de bague **Zb** jusqu'à la profondeur de 3 mm sont contenus dans l'intervalle de tolérance.

Selon une caractéristique avantageuse de cette variante, le procédé consiste pour la mesure des épaisseurs **e** de la paroi de chaque récipient, à mesurer un ensemble de longueurs de segments réunissant deux à deux des points de la surface extérieure **SE** et des points de la surface intérieure **SI** du modèle géométrique numérique de chaque récipient. Les segments mesurés sont :
- de préférence sensiblement orthogonaux à une des surfaces interne et externe, de préférence à la surface externe **SE** ;
- situés à au moins deux hauteurs distinctes **ZE1, ZE2** dans la région à inspecter ;
- de directions voisines à des rayons partant de l'axe de symétrie **ZM** et répartis anguiairement autour de l'axe de symétrie du modèle géométrique numérique, avec au moins un segment non orthogonal aux directions de projection **Dij** ;
- pour chaque hauteur, en nombre supérieur au double du nombre de directions de projections **Dij.**

Il est également possible de choisir comme région à inspecter, par exemple le corps **4** du récipient s'étendant entre le jable et l'épaule. Ainsi la région à inspectée peut être délimitée par deux plans parallèles au fond **3** ou au plan de pose du récipient, l'un positionné au-dessus du jable l'autre sous l'épaule. On détermine alors le modèle géométrique numérique des surfaces interne et externe de la région inspectée, ce qui permet de mesurer l'épaisseur de verre **e** comprise entre ces surfaces en de multiples points, fournissant ainsi une mesure de la répartition du verre.

Comme illustré à la **Fig. 15****,** on peut au moins pour deux hauteurs distinctes **ZE1, ZE2,** mesurer l'épaisseur **e** de la paroi le long de plusieurs segments radiaux orthogonaux à l'axe **ZM** et repartis de 0 à 360°. On réalise ainsi au minimum la même fonction que permettent les capteurs optiques dans une machine faisant tourner le récipient, à savoir, chercher l'épaisseur minimale sur la circonférence à une, deux, trois ou quatre hauteurs distinctes.

Selon l'invention, le modèle géométrique numérique de la région inspectée de chaque récipient comprend les surfaces internes **SI** et externes **SE.** L'on peut donc déterminer l'épaisseur **e** en mesurant un grand nombre de segments joignant la surface externe **SE** et la surface interne **SI,** repartis uniformément sur toute la hauteur **Z** et les directions **θ**, avec un pas de hauteur **dZ** et un pas angulaire **dθ** aussi fins que permis par la résolution des capteurs et du modèle géométrique numérique calculé pour chaque récipient. Ainsi, l'on peut cartographier l'épaisseur dans tout ou partie de la région d'inspection, voire d'un récipient entier.

Selon une variante de réalisation, le procédé est caractérisé en ce que l'on calcule une épaisseur minimale sur la région à inspecter, ou bien l'on détermine une zone connexe de la paroi présentant une épaisseur inférieure à un seuil de tolérance appelée « zone mince » et l'on décide de la qualité du récipient en fonction de l'épaisseur minimale ou de la surface et/ou de la forme de la zone de la zone mince.

Selon une variante de réalisation, la région à inspecter correspond à au moins une partie du goulot **5** du récipient de sorte que les images radiographiques sont analysées pour construire un modèle géométrique numérique d'au moins la surface interne du goulot de sorte que le diamètre interne du goulot **D** peut être mesuré et correspondre à la mesure d'une caractéristique dimensionnelle de la région à inspecter.

Selon une autre variante de réalisation, la région à inspecter correspond à au moins une partie du corps **4** du récipient de sorte que les images radiographiques sont analysées de manière à construire un modèle géométrique numérique de la surface interne et de la surface externe du récipient dans la partie de paroi inspectée, et à partir des surfaces interne et externe du modèle géométrique numérique, à obtenir la mesure de l'épaisseur **e** de la paroi de verre du corps du récipient comprise entre lesdites surfaces.

Selon une variante préférée de réalisation, la région à inspecter comprend au moins une partie du goulot et une partie de la paroi du corps du récipient de sorte que les images radiographiques sont analysées de manière à construire un modèle géométrique numérique de la surface interne et de la surface externe du récipient, et à partir des surfaces interne et externe du modèle géométrique numérique, à obtenir les mesures d'un diamètre interne du goulot et de l'épaisseur de la paroi de verre du corps du récipient.

Il ressort de la description qui précède que l'invention permet de construire pour chaque récipient un modèle géométrique numérique correspondant au moins à la région à inspecter comprenant au moins une partie du goulot et/ou une partie du corps de chaque récipient. Comme indiqué précédemment, le modèle géométrique numérique est construit en utilisant le coefficient d'atténuation du verre constituant les récipients **2.**

Certaines des méthodes de mesures précédentes reviennent à analyser la géométrie du modèle géométrique numérique de chaque récipient selon des sections successives à différentes hauteurs **Z,** de plans orthogonaux à l'axe de symétrie **ZM** du modèle géométrique numérique du récipient, donc des sections horizontales, qui sont analysées ensuite selon des directions radiales, en faisant varier la direction de mesure avec l'angle **θ** entre 0 et 360°. On obtient bien entendu les mêmes résultats par des coupes selon des plans sécants à l'axe de symétrie **ZM** des récipients, donc des sections verticales, reparties selon des angles **θ** entre 0 et 360°.

Selon une variante avantageuse de réalisation, le modèle géométrique numérique est construit également en utilisant un modèle géométrique a priori de la région inspectée permettant d'accélérer et fiabiliser les calculs de reconstruction du modèle géométrique numérique de chaque récipient.

Ainsi, le modèle géométrique a priori est un modèle numérique géométrique de la série de récipients, servant d'initialisation pour un logiciel de reconstruction afin de construire le modèle géométrique numérique de chaque récipient inspecté. Son rôle est principalement de fournir au système informatique, des informations sur la forme, la géométrie et les dimensions de l'objet à modéliser par le calcul.

Grace à ces informations a priori, il devient possible :
- de ne pas modéliser, à partir des images radiographiques, l'atténuation dans des régions de l'espace d'images vides de matériau a priori car l'atténuation y est considérée comme nulle ;
   et / ou
- de ne modéliser à partir des images radiographiques, que les surfaces sur lesquelles les mesures de dimensions sont à faire, éventuellement directement sans passer par la détermination de voxels ;
   et / ou
- de ne déterminer que des écarts entre les surfaces modélisées à partir des images radiographiques et des surfaces idéales théoriques.

La connaissance du modèle géométrique a priori des récipients en verre permet également de ne pas déterminer à partir des images radiographiques, des valeurs d'atténuation dans des régions de l'espace contenant de la matière selon le modèle a priori car elle est connue comme celle du verre utilisé.

Toutefois il faut comprendre que selon l'invention, aucune mesure d'un récipient n'est déduite d'une mesure sur le modèle géométrique a priori, puisque ce modèle est connu indépendamment dudit récipient et représente un idéal théorique non réel.

Ainsi le modèle géométrique a priori est un modèle numérique de la série de récipients, servant d'initialisation pour le logiciel de reconstruction.

Le système informatique dispose donc d'un modèle géométrique a priori de la région à inspecter pour effectuer cette opération de calcul. Ainsi, l'installation 1 comporte un dispositif de mise à disposition pour le système informatique, d'un modèle géométrique a priori de la région à inspecter pour les récipients ou des séries de récipients.

Le dispositif de mise à disposition pour le système informatique, d'un modèle géométrique a priori de la région à inspecter est une mémoire de masse, un réseau informatique filaire ou hertzien ou une interface homme machine.

Selon une première variante de l'invention, le modèle géométrique a priori est obtenu par le modèle numérique de conception par ordinateur des récipients, réalisé lors de leur conception (CAO 3D). Dans ce cas, il est mis à disposition du système informatique par différents moyens possibles, tels qu'une connexion à travers un réseau informatique, à une base de données contenant plusieurs modèles CAO correspondant aux diverses modèles de récipients susceptibles d'être mesurées en production, une sélection par l'opérateur dans une base de données interne à l'installation, etc...

Selon une deuxième variante de l'invention, le modèle géométrique a priori est obtenu d'un modèle numérique géométrique construit à partir de la mesure d'un ou de plusieurs récipients de la même série (donc de même modèle commercial) par un dispositif de mesure, par exemple par une machine à mesurer par palpeur ou un appareil de tomographie axiale, Le modèle géométrique a priori peut être construit par une fusion des mesures de plusieurs récipients fabriqués de la même série.

Selon une troisième variante de l'invention, le modèle géométrique a priori est un modèle numérique géométrique généré par le système informatique à partir de valeurs saisies et/ou de dessins réalisés et/ou de formes sélectionnées par un opérateur sur l'interface homme-machine du système.

Par exemple, pour fournir le modèle géométrique a priori dans le cas d'un contrôle des dimensions internes du goulot, la région inspectée contient au moins le goulot, donc la région du récipient comprise entre le sommet de la bague et l'épaule du récipient. Le modèle géométrique a priori du goulot peut être un simple tronc-cône creux dont sont connus la hauteur, les deux diamètres haut et bas, et l'épaisseur de paroi. Il peut aussi être un modèle géométrique complet par exemple d'une bague de type vin, avec ses reliefs externes, contre bague, et arrondis inclus. Selon un autre exemple, le système informatique peut par ses interfaces recevoir des descriptions techniques du modèle a priori, comprenant par exemple un type de bague à vis standardisé décrit soit par un modèle 3D enregistré, soit par des paramètres de longueurs, profondeurs et pas de filet etc....

De même pour fournir le modèle géométrique a priori dans le cas d'un contrôle de la répartition de verre au niveau du corps du récipient, la région inspectée s'étend au moins sur une hauteur d'inspection située entre le jable (ou talon) et l'épaule. Le modèle géométrique a priori du corps peut être une simple portion de cylindre creux parfait, dont sont renseignés seulement le diamètre extérieur, la hauteur et l'épaisseur moyenne. Le moyen de mise à disposition du modèle numérique a priori peut donc être limité à la saisie ou à la transmission numérique des valeurs de diamètre extérieur, hauteur et épaisseur. Bien entendu ces méthodes se généralisent aisément pour des récipients de forme quelconque, par exemple de section polygonale.

Il faut comprendre que le modèle géométrique a priori doit au minimum contenir suffisamment d'informations techniques, géométriques, topologiques et/ou numériques, pour renseigner le système informatique sur la structure générale tridimensionnelle de la série de récipients, le degré de détail et de précision de ces informations pouvant être très faible sans pénaliser la précision recherchée pour les mesures linéaires.

Il est possible de paramétrer le contrôle en mettant à disposition du système informatique des positions de jauges virtuelles. Dans ce cas le dispositif selon l'invention comporte évidemment des moyens de mise à disposition des intervalles de tolérances des mesures.

Un autre moyen de déterminer des mesures de dimensions et leur conformité est la comparaison du modèle géométrique numérique de la région inspectée avec un modèle géométrique de référence ou théorique.

Le modèle géométrique de référence est un modèle idéal de la série des récipients inspectés. Pour réaliser un contrôle dimensionnel, on peut comparer le modèle géométrique numérique de la région inspectée de chaque récipient avec le modèle géométrique de référence commun à la série de récipients, par un algorithme comprenant la mise en correspondance des modèles, puis la mesure des écarts entre les modèles. Le modèle géométrique de référence peut être issu de la CAO au moins pour la surface externe des récipients.

Il est ainsi possible de procéder à une opération de mise en correspondance du modèle géométrique numérique de la région inspectée de chaque récipient avec le modèle géométrique de référence, puis de déterminer des écarts de dimension en mesurant des distances entre des éléments de surface appartenant au modèle de référence et des éléments de surface appartenant au modèle géométrique numérique. Par exemple, on peut mesurer selon l'invention ce que les verriers appellent le « diamètre à l'ouverture », qui est spécifié par une tolérance de diamètre minimal et maximal, par exemple un intervalle de tolérance de 18 mm +/- 0.5, sur une profondeur donnée à partir de la surface de bague, par exemple 3 mm. Selon l'invention, il est possible de positionner de manière virtuelle, une première surface cylindrique de hauteur 3 mm, de diamètre maximum s'inscrivant dans la surface interne modélisée du goulot, et de même une seconde surface cylindrique de hauteur 3 mm, de diamètre minimum contenant la surface interne de chaque récipient modélisée, et de considérer comme mesures du diamètre à l'ouverture de chaque récipient les diamètres des surfaces cylindriques inscrite et exinscrite, qui sont respectivement comparés aux tolérances.

Selon une variante de l'invention, le modèle géométrique de référence et le modèle géométrique a priori sont le même modèle géométrique.

Selon une autre variante de l'invention, le modèle géométrique a priori est moins précis, moins complet et/ou diffèrent du modèle géométrique de référence.

Il ressort de la description qui précède que le système informatique détermine pour chaque récipient, au moins un diamètre interne du goulot et/ou une épaisseur de la paroi de verre du corps du récipient. D'une manière générale, l'invention permet de réaliser une série de mesures de dimensions sur les récipients **2.** Le contrôle dimensionnel consiste à mesurer des dimensions réelles et à les comparer aux dimensions exigées. A priori, tout récipient d'une série est proche du récipient de référence idéal possédant les dimensions exigées mais s'en écarte par des variations dimensionnelles. L'objectif est généralement de comparer les mesures obtenues sur les récipients avec des valeurs exigées, par exemple définies par un service qualité. Ces mesures de dimensions ou les écarts de ces mesures par rapport aux valeurs exigées peuvent être affichées, enregistrées, etc. Elles peuvent aussi servir à prendre des décisions de conformité des récipients qui peuvent être triés automatiquement. Selon une caractéristique avantageuse de réalisation, le système informatique est relié à un dispositif d'affichage des valeurs de mesures linéaires de la région à inspecter et/ou des écarts dimensionnels par rapport à des valeurs de référence. Par exemple, l'installation selon l'invention peut comporter un écran de visualisation des images radiographiques de la région inspectée et des dimensions mesurées.

Selon une caractéristique avantageuse de réalisation, le système informatique est relié à un dispositif de tri des récipients en fonction de la mesure linéaire de la région à inspecter. Ainsi, ce dispositif de tri peut éjecter du dispositif de transport, les récipients considérés comme défectueux en considération des dimensions linéaires mesurées.

Bien entendu, les positions relatives des foyers **Fj** et des capteurs d'images **Cji** sont diverses en étant rappelé que les foyers **Fj** et les capteurs d'images **Cji** sont positionnés en dehors du volume de convoyage **Vt.**

Selon une variante de réalisation, l'installation **1** comporte un seul foyer **Fj** = **F1** disposé selon un côté du volume de convoyage **Vt** et une série de capteurs d'images **Cji** = **C1i** = **C11, C12, C13,** ... disposés selon le côté opposé du volume de convoyage **Vt** pour recevoir les rayons provenant du foyer **F1** et ayant traversés la région à inspecter. Dans cet exemple, le foyer présente une ouverture **Of** qui est mesurée dans au moins un plan quelconque, comme par exemple le plan **X, Y** dans la **Fig. 1****,** qui est supérieure ou égale à 120°. Cette ouverture **Of** est considérée en sortie de foyer, dans le cas où l'installation comprend entre le foyer et le volume **Vt,** ou entre le volume **Vt** et les capteurs d'images, des écrans de limitation des faisceaux aux seuls faisceaux utiles, dans le but de réduire du diffusé.

Selon une autre variante de réalisation, au moins deux foyers **Fj** (F1 et F2) de production de rayons X, sont positionnés séparément en deux positions distinctes et au moins trois capteurs d'images **Cji,** sensibles aux rayons X sont placés de manière que chaque foyer est associé à au moins un capteur d'images **Cji,** et que chaque capteur d'images **Cji** est associé à un foyer et reçoit les rayons X issus dudit foyer et traversant la région à inspecter. Dans cet exemple, chaque foyer présente une ouverture supérieure ou égale à 60°de sorte que la somme des ouvertures des deux foyers est supérieure ou égale à 120°.

Dans l'exemple de réalisation illustré aux **Fig. 5** à **7****,** l'installation **1** comporte trois foyers **F1**, **F2, F3** associés chacun à un tube **12** générateur distinct. L'installation **1** comporte aussi cinq capteurs d'images **C11, C12, C13, C14** et **C15** sensibles chacun aux rayons X issus du premier foyer associé **F1**, cinq capteurs d'images **C21, C22, C23, C24** et **C25** sensibles chacun aux rayons X issus du deuxième foyer associé **F2** et trois capteurs d'images **C31, C32**, **C33** sensibles chacun aux rayons X issus du troisième foyer associé **F3.**

Selon cet exemple de réalisation, l'installation comporte au moins un foyer (et dans l'exemple, deux foyers **F1** et **F2)** de chacun desquels est issu un faisceau de rayons X divergent. Au moins un foyer (et dans l'exemple, deux foyers **F1** et **F2)** sont positionnés d'un côté du plan sécant **Ps** de sorte que chacun des faisceaux traverse le pian sécant **Ps** et la région à inspecter, tandis qu'au moins un capteur d'images **Cji** associé audit foyer **Fj** pour recevoir les rayons X issus dudit foyer **Fj** est disposé du côté opposé par rapport au plan sécant **Ps.** (Dans l'exemple, ce sont les cinq capteurs d'images **C11, C12, C13, C14** et **C15** sensibles chacun aux rayons X issus du foyer associé **F1** et les cinq capteurs d'images **C21, C22, C23, C24** et **C25** sensibles chacun aux rayons X issus du foyer associé **F2).** Bien entendu, il peut être prévu de disposer un foyer d'un côté du plan sécant **Ps** et un autre foyer de l'autre côté du plan sécant **Ps** de sorte que les capteurs d'images associés sont disposés également de part et d'autre du plan sécant **Ps.**

Selon une variante avantageuse de réalisation qui est illustrée aux **Fig. 5** à **7****,** un foyer **Fj** duquel est issu un faisceau de rayons X divergent est disposé d'un côté du plan de convoyage **Pc** de sorte que son faisceau traverse le plan de convoyage **Pc,** tandis qu'au moins un capteur d'images **Cji** est associé audit foyer **Fj** pour recevoir les rayons X issus dudit foyer est positionné du côté opposé par rapport au plan de convoyage **Pc.** Dans l'exemple illustré, un foyer **F3** est disposé au-dessus du plan de convoyage **Pc** tandis que trois capteurs d'images **C31, C32, C33** sont positionnés au-dessous du plan de convoyage **Pc.** Bien entendu, la position entre le foyer et les capteurs d'images peut être inversée par rapport au plan de convoyage.

Selon une variante avantageuse de réalisation, au moins un des foyers **Fj** est disposé dans le plan de convoyage **Pc**. De préférence, ces foyers coopèrent avec des capteurs d'images associés situés à leur opposé par rapport au plan sécant **Ps,** et ainsi dans le cas d'un transport des récipients disposés sur un convoyeur plan, cette disposition permet que dans les images radiographiques, les projections des récipients ne soient pas superposées à la projection du convoyeur. Ainsi, dans le modèle géométrique numérique des récipients, la partie du récipient en contact avec le convoyeur peut être déterminée précisément.

Selon une caractéristique avantageuse de réalisation, la disposition des capteurs d'images **Cji** et des foyers est telle que les rayons X issus du ou des foyers **Fj** et atteignant les capteurs d'images **Cji** traversent uniquement une région à inspecter à la fois. En d'autres termes, les rayons X ne traversent qu'un seul récipient à la fois. Il est à noter que l'installation peut comporter un système pour contrôler l'espacement entre les récipients successifs en défilement, comme par exemple des vis ou des courroies en contact latéral avec les récipients.

Un objet de l'invention est d'obtenir un procédé non seulement rapide, mais également peu coûteux, apte à calculer avec la précision nécessaire à un contrôle dimensionnel. L'invention vise à réduire le nombre d'images nécessaires à la reconstruction au nombre minimum permettant d'atteindre la précision dimensionnelle voulue. Par exemple, l'invention permet avec neuf projections et un nombre limité d'images de la région inspectée, de mesurer le diamètre interne d'un cylindre à +/- 0,05 mm. Avantageusement, l'installation conforme à l'invention comporte entre un et quatre foyers **Fj** et de préférence un ou deux foyers **Fj** et de préférence entre quatre et quinze capteurs d'images **Cji.**

Selon l'invention, il convient de disposer les capteurs d'images et le ou les foyers afin que la combinaison des au moins trois directions de projections optimise la détermination du modèle géométrique numérique de la région inspectée, en considérant qu'il faut laisser le volume traversé **Vt** libre pour la circulation des récipients. Les règles ci-après sont avantageusement mises en œuvre dans le cadre de l'invention, ces règles étant valables pour des capteurs d'images linéaires ou matricielles.

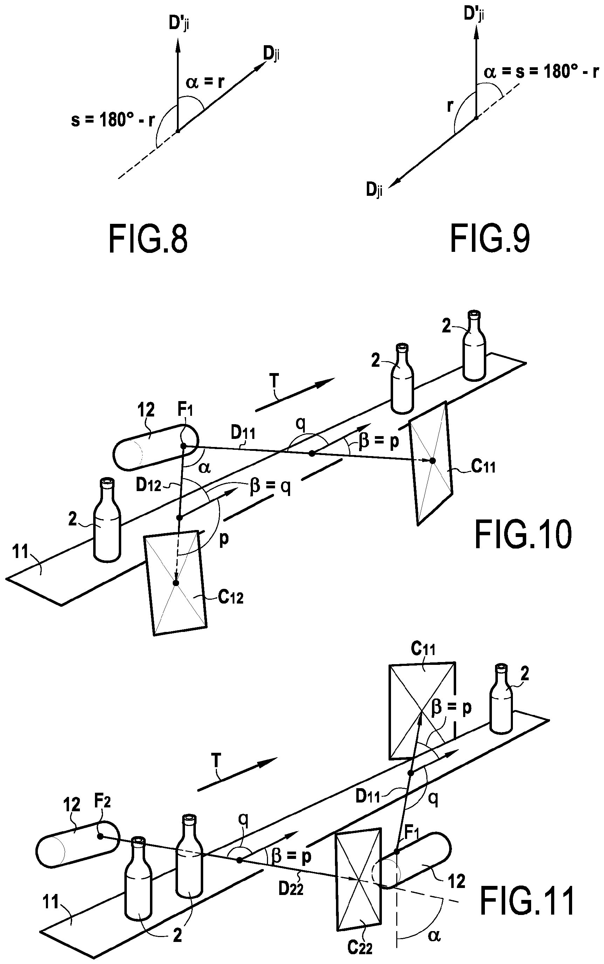

Dans ce qui suit, un angle est une valeur absolue. Les **Fig. 8** et **9** illustrent deux directions de projection **Dji** et **D'ji** qui sont aussi des vecteurs. Ces **Figures** font apparaître l'angle **r** entre ces deux directions de projection soit ***r*** = (*Di̅j̅,̅D̅'̅ij*) et ***s*** l'angle complémentaire à l'angle **r,** soit **s**= 180°-**r**. Par définition, l'angle utile α entre deux directions de projection différentes **Dji** et **D'ji,** est le plus petit des angles **r** et **s,** soit α = Min(**r**, **s**). Ainsi, l'angle utile α est le plus petit des angles formés par les deux droites portant les directions de projection **Dij, D'ji** et ramenées en tout point de la région inspectée.

Selon une variante avantageuse de l'invention, on acquiert pour chaque récipient, au moins deux images issues de deux projections radiographiques selon deux directions différentes **Dji** et **D'ji** faisant entre elles un angle utile α supérieur ou égal à 45° et inférieur ou égal à 90°. Selon une variante avantageuse de réalisation, on acquiert pour chaque récipient au moins deux images issues de deux projections radiographiques selon deux directions différentes faisant entre elles un angle utile α supérieur ou égal à 60° et inférieur ou égal à 90°.

Pour ce faire, l'installation **1** selon l'invention comporte au moins un foyer et deux capteurs d'images disposés de manière que les directions de projection de la région inspectée qu'ils reçoivent possèdent entre elles un angle utile α supérieur ou égal à 45° et inférieur ou égal à 90° et, avantageusement supérieur ou égal à 60° et inférieur ou égal à 90°.

Par exemple comme illustré à la **Fig. 5****,** l'angle utile α entre les directions **D15** et **D11,** et entre les directions **D13** et **D25** sont supérieurs à 45°. Bien évidemment il doit être compris qu'au moins un angle utile est supérieur ou égal à 45° et inférieur ou égal à 90° et avantageusement qu'au moins un angle utile est supérieur ou égal à 60° et inférieur ou égal à 90° et les autres angles utiles entre deux directions **Dji** sont quelconques. L'homme du métier à partir de cette règle saura rechercher une disposition qui offre une distribution la plus complète possible des directions de projections de la région inspectée.

Selon une autre caractéristique avantageuse, pour chaque récipient, le système informatique acquiert au moins une image radiographique de la région inspectée correspondant à une direction de projection faisant un angle d'ouverture β déterminée avec la direction de déplacement **T.**

Comme illustré sur les **Fig. 10** et **11****,** il est considéré l'angle **p** entre une direction de projection (vecteur **Dji**) et la trajectoire des récipients (vecteur **T),** soit l'angle **p** = **(Dji, T)** c'est-à-dire **p** = (**D11,** T) et **p** = (**D12, T)** dans l'exemple illustré à la **Fig. 10** et **p** = **(D22**, **T)** et **p** = (**D11, T)** dans l'exemple illustré à la **Fig. 11****.** L'angle **q** complémentaire à l'angle **p** est tel que **q=** 180°-**p**. Par définition, l'angle d'ouverture β entre une direction de projection **Dji** et la trajectoire **T** est le plus petit des angles **p** et **q,** à savoir β = **Min (p, q).** Ainsi, l'angle d'ouverture β est le plus petit des angles formés par les deux droites portant l'une la direction de projection **Dji** et l'autre la trajectoire **T,** ramenées en tout point de la région inspectée.

Selon une autre caractéristique avantageuse, pour chaque récipient, le système informatique acquiert au moins une image radiographique de la région inspectée correspondant à une direction de projection **Dji** ayant avec la direction de déplacement **T,** un angle d'ouverture β compris entre 10° et 60°. En d'autres termes, l'installation selon l'invention comporte au moins un foyer et un capteur d'images **Cji** disposés de manière que, lorsqu'un récipient traverse le champ des capteurs d'images, la direction de projection **Dji** de la région inspectée sur le capteur d'images **Cji** fait un angle d'ouverture β avec la direction de déplacement **T** compris entre 10° et 60°.

En d'autres termes, la configuration de l'installation **1** est optimisée pour réduire son encombrement dans la direction de déplacement tout en conservant un volume traversé **Vt** adapté aux récipients et une bonne qualité de reconstruction.

En raison du volume traversé **Vt,** l'installation ne produit pas de projection autour de la direction de déplacement **T.** Le volume traversé **Vt** impose un angle beta minimum. Selon l'invention **β** min = 10°. Il n'y a aucun capteur disposé de manière à fournir une projection d'angle **β** inférieur à 10°.

Il faut déduire de ce qui précède que la répartition des angles de projections pour chaque récipient n'est pas uniforme selon l'invention.

Comme illustré à la **Fig. 9****,** la répartition des angles de projection présente une lacune, qu'on appelle une région d'angle mort, de deux fois 2 × 10° soit 20°, au lieu d'avoir une couverture complète sur 180°.

Par exemple comme illustré à la **Fig. 10****,** une installation selon l'invention comporte au moins un foyer **F1** et deux capteurs d'images **C11**, **C12** dont les directions de projections **D11**, **D12** définissent avec la direction de déplacement **T,** un angle d'ouverture β compris entre 10° et 60° correspondant respectivement aux angles **p** et **q.** Dans l'exemple illustré à la **Fig. 11****,** l'installation comporte au moins un capteur d'images **C11**, associé à un foyer **F1** et un capteur d'images **C22** associé à un foyer **F2.** Les directions de projections **D11, D22** définissent l'angle d'ouverture β compris entre 10° et 60° et correspondant aux angles **p.** De même, l'installation illustrée à la **Fig. 5****,** comporte un capteur d'images **C11** associé au foyer **F1** et dont la direction de projection **D11** fait un angle β compris entre 10° et 60°, par rapport à la direction de déplacement **T.**

Les capteurs d'images **Cji** sont du type matriciel ou linéaire.

Selon une variante préférée de réalisation, l'installation **1** comporte des capteurs d'images linéaires. Selon cette variante préférée, chaque capteur d'images **Cji** comporte un réseau linéaire d'éléments sensibles aux rayons X, distribués selon une droite de support **Lji** définissant avec le foyer associé **Fj,** un plan de projection **Pji** contenant la direction de projection **Dji (****Fig. 2****).** Ces capteurs d'images **Cji** sont disposés de manière qu'au moins m éléments sensibles de chacun de ces capteurs d'images reçoivent la projection radiographique de la région à inspecter par le faisceau de rayons X issu du foyer **Fj** associé, avec les pians de projection **Pji** pour les différents capteurs d'images qui sont distincts entre eux et non parallèles au plan de convoyage **Pc.** Le nombre m d'éléments sensibles de chaque capteur d'images linéaires est supérieur à 128 de préférence supérieure à 512. La distance entre éléments sensibles voisins (appelée « pas » ou « pitch » en anglais) et/ou la dimension des éléments sensibles est de préférence inférieure à 800 µm. La fréquence de lecture des lignes d'images est de préférence supérieure à 100Hz, avantageusement supérieure à 1kHz. Bien entendu ces paramètres sont adaptés en fonction de la taille des récipients, la précision recherchée et la vitesse de défilement.

Selon une caractéristique avantageuse de réalisation, au moins trois capteurs d'images **Cji** linéaires ont leurs droites de support **Lji** parallèles entre elles.

Selon une autre caractéristique avantageuse de réalisation, au moins trois capteurs d'images **Cji** linéaires ont leurs droites de support **Lji** orthogonales au plan de convoyage **Pc.**

Selon une variante, un foyer **Fj** est positionné afin que son faisceau traverse la région inspectée puis le plan de convoyage **Pc.** De plus, au moins un capteur d'images **Cji** linéaire associé est positionné opposé au foyer **Fj** par rapport au plan de convoyage **Pc** et de manière que sa droite support **Lji** soit parallèle au plan de convoyage **Pc.**

Selon ces variantes de réalisation avec des capteurs d'images linéaires, le système d'acquisition acquiert à l'aide de chacun des au moins trois capteurs d'image **Cji,** à chaque déplacement incrémental de chaque récipient sur la trajectoire, des images linéaires radiographiques de la région à inspecter selon un nombre choisi afin que pour chaque récipient, l'ensemble de la région à inspecter se trouve représentée complètement dans l'ensemble des images linéaires radiographiques. Ainsi, lors du déplacement d'un récipient, chaque capteur d'images est apte à acquérir des images radiographiques linéaires de sorte que l'ensemble de la région à inspecter du récipient se trouve représenté complètement dans l'ensemble des images linéaires radiographiques obtenues à partir dudit capteur d'images. Ainsi, pour chaque récipient, il est obtenu au moins trois ensembles d'images linéaires radiographiques de la région à inspecter qui sont ensuite analysées. Il est possible de constituer des images radiographiques matricielles de la région inspectée, par juxtaposition des ensembles d'images linéaires radiographiques. Mais la reconstruction du modèle géométrique et la mesure ne l'imposent pas nécessairement.

Il est à noter que compte tenu du volume traversé **Vt,** aucune projection radiographique n'est acquise dans la région d'angle mort (β < ± 10°) située de part et d'autre de la direction de déplacement **T.** Le procédé selon l'invention permet, malgré l'absence de projections radiographiques dans cet intervalle d'angles, de reconstruire, grâce au modèle géométrique a priori, un modèle géométrique numérique précis et complet du récipient. Il est ainsi possible de réaliser des mesures de dimension linéaire sur tout le modèle géométrique numérique et en particulier selon des directions non orthogonales aux directions de projection possibles, y compris des mesures de dimension linéaire selon des directions de mesure orthogonales aux directions de projections manquantes correspondant à la région d'angle mort située de part et d'autre de la direction de déplacement **T.** En effet, sans le procédé selon l'invention, par exemple avec les méthodes destinées à la tomographie axiale « complètes » traditionnelles, dans le cas où aucune projection radiographique n'est acquise selon les directions d'un angle mort, alors le modèle reconstruit présente également dans un secteur angulaire orthogonal à l'angle mort, des erreurs de reconstruction rendant impossible de déterminer une surface précisément et donc rendant impossible toute mesure de dimension linéaire d'un récipient.

Le déplacement incrémental est la translation effectuée par le récipient entre deux acquisitions successives d'images. Pour une vitesse de défilement donnée des récipients, le déplacement incrémental est limité inférieurement par la vitesse de lecture des capteurs d'images. Ce paramètre, combiné à la résolution verticale des capteurs d'images linéaires, (ou aux résolutions horizontale et verticale des capteurs d'images matricielles), conditionne la densité de points mesurés du modèle géométrique numérique, donc in fine la résolution spatiale et la précision de la mesure de la caractéristique dimensionnelle de la région à inspecter. Par exemple, le déplacement incrémental pourra être inférieur à 0.5 mm, de préférence inférieur à 0.2 mm ce qui signifie que les capteurs d'images sont lus 5 fois durant un déplacement de 1 mm des récipients.

Bien entendu, le nombre de foyers, le nombre de capteurs d'images associés à chaque foyer, et leurs dispositions relatives sont choisis de toute manière appropriée en fonction du degré de précision de mesure souhaité, de la forme des récipients et de leur espacement sur le convoyeur.

L'invention permet la mesure de dimensions (pour un contrôle dimensionnel) sur des récipients en verre défilant à haute cadence et sans contact, par au moins trois projections rayons X de directions différentes, et moyennant un calcul optimal, rapide et suffisamment juste, grâce à la propriété mono matériaux et par la connaissance a priori de la forme générale des récipients.

Il est à noter que dans les verreries, il est possible que plusieurs séries de récipients différents soient présentes en même temps sur une même ligne de contrôle. L'installation selon l'invention peut être utilisée pour inspecter un flux de récipients composé de plusieurs séries différentes, par exemple une première série et une deuxième série. Dans ce cas, l'installation comporte un système d'indication au système informatique de la série à laquelle appartient chacun des récipients afin de mettre en œuvre le procédé de l'invention à tous les récipients d'une même série. Autrement dit, l'installation est munie d'un moyen pour mettre à disposition du système informatique, un modèle géométrique a priori de chaque série de récipient, et le système informatique est adapté afin d'associer les images radiographiques de chaque récipient avec la série à laquelle il appartient.

L'invention n'est pas limitée aux exemples décrits et représentés car diverses modifications peuvent y être apportées sans sortir de son cadre.

## Revendications

1. - Procédé de mesure de dimensions d'au moins une région à inspecter de récipients vides en verre d'une série **(2)** présentant chacun une paroi formant un goulot et un corps et délimitée par une surface interne et une surface externe, le procédé consistant à :
- choisir au moins une région à inspecter comprenant au moins une partie du goulot et/ou une partie du corps du récipient ;
- transporter les récipients posés sur leur fond dans un plan de convoyage **(Pc)** selon une trajectoire plane avec une direction matérialisée par un vecteur **(T)** de déplacement, ces récipients engendrant un volume de convoyage **(Vt)** au cours de leur déplacement ;
- positionner, de part et d'autre de la région à inspecter, au moins un foyer **(Fj)** d'un tube générateur de rayons X et des capteurs d'images **(Cji)** sensibles aux rayons X et exposés chacun aux rayons X issus d'un foyer associé **(Fj),** ces rayons X ayant traversé au moins la région à inspecter produisant sur chaque capteur d'images une projection radiographique selon une direction de projection **(Dji)** ;
- acquérir à l'aide des capteurs d'images **(Cji)** pour chaque récipient au cours de son déplacement, au moins trois images radiographiques de la région inspectée, obtenues d'au moins trois projections radiographiques de la région à inspecter dont les directions de projection sont différentes ;
- construire à l'aide d'un système informatique, un modèle géométrique numérique de la région à inspecter pour chaque récipient, à partir d'au moins trois images radiographiques, ledit modèle géométrique contenant les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une desdites directions de projection **(Dji),**
- déduire au moins un diamètre interne du goulot mesuré sur le modèle dans un plan non orthogonal à une desdites directions de projection **(Dji),** et/ou au moins une épaisseur de la paroi du corps mesurée sur le modèle dans un plan non orthogonal à une desdites directions de projection (**Dji**).

2. - Procédé selon la revendication 1, **caractérisé en ce que** le modèle géométrique numérique de la région à inspecter contenant les coordonnées tridimensionnelles d'un ensemble de points est constitué par :
- au moins deux points tridimensionnels de l'espace appartenant chacun à une surface interne et/ou externe de la paroi du récipient et situés dans un plan non orthogonal à une direction de projection **(Dji),** et non parallèle à la direction **(T)** de déplacement ;
- et/ou au moins une représentation surfacique des surfaces interne et externe de la paroi du récipient contenant des points n'appartenant pas à un plan orthogonal à une direction de projection **(Dji),** et n'appartenant pas à un plan parallèle à la direction **(T)** de déplacement;
- et/ou au moins une section de la région à inspecter, selon un plan différent d'un plan orthogonal à une direction de projection **(Dji)** et différent d'un plan parallèle à la direction **(T)** de déplacement.

3. - Procédé selon l'une des revendications précédentes, **caractérisé en ce qu'**il consiste à choisir comme région à inspecter, au moins une zone définie s'étendant entre deux plans parallèles au plan de convoyage **(Pc).**

4. - Procédé selon l'une des revendications précédentes, **caractérisé en ce qu'**il consiste pour la mesure du goulot de chaque récipient, à mesurer comme diamètres intérieurs du goulot, les longueurs d'un ensemble de segments de droite, lesdits segments étant :
• orthogonaux à l'axe de symétrie du modèle géométrique numérique ;
• croisant l'axe de symétrie du modèle géométrique numérique ;
• situés à au moins deux hauteurs distinctes **(ZG1, ZG2)** dans le goulot du modèle géométrique numérique ;
• de directions réparties angulairement autour de l'axe de symétrie du modèle géométrique numérique, avec au moins un segment non orthogonal aux directions de projection **(Dij)** ;
• pour chaque hauteur, en nombre supérieur au nombre de directions de projections **(Dij)** ;
- et chaque segment reliant deux points qui appartiennent à la surface interne du goulot du modèle géométrique numérique et qui sont opposés par rapport à l'axe de symétrie du modèle géométrique numérique du récipient.

5. - Procédé selon la revendication 4, **caractérisé en ce que** l'on calcule le diamètre minimum sur plusieurs hauteurs et plusieurs directions du goulot du modèle géométrique numérique, de manière à déterminer la mesure de brochage ou de diamètre à l'ouverture.

6. - Procédé selon l'une des revendications précédentes, **caractérisé en ce qu'**il consiste pour la mesure des épaisseurs de la paroi de chaque récipient, à mesurer un ensemble de longueurs de segments réunissant deux à deux des points de la surface extérieur et des points de la surface intérieure du modèle géométrique numérique de chaque récipient, les segments mesurés étant :
• sensiblement orthogonaux à une des surfaces interne et externe, de préférence à la surface externe ;
• situés à au moins 2 hauteurs distinctes **(HE1, HE2)** dans la région à inspecter ;
• de directions voisines à des rayons partant de l'axe de symétrie et répartis angulairement autour de l'axe de symétrie du modèle géométrique numérique du récipient, avec au moins un segment non orthogonal aux directions de projection **(Dij)** ;
• pour chaque hauteur, en nombre supérieur au double du nombre de directions de projections **(Dij).**

7. - Procédé selon la revendication précédente, **caractérisé en ce que** l'on calcule une épaisseur minimale sur la région à inspecter, ou bien l'on détermine une zone connexe de la paroi présentant une épaisseur inférieure à un seuil de tolérance appelée « zone mince » et l'on décide de la qualité du récipient en fonction de l'épaisseur minimale ou de la surface et/ou de la forme de la zone de la zone mince.

8. - Procédé selon l'une des revendications précédentes, **caractérisé en ce qu'**il consiste à réaliser et acquérir des projections radiographiques de la région inspectée d'un récipient de manière que les rayons X issus du ou des foyers et atteignant les capteurs d'images (**Cji**) ne traversent pas d'autres récipients.

9. - Procédé selon l'une des revendications précédentes, **caractérisé en ce que** :
- les capteurs d'images (**Cji**) sont de type linéaire comportant chacun un réseau linéaire d'éléments sensibles aux rayons X, distribués selon une droite de support (**Lji**) définissant avec le foyer associé (**Fj**), un plan de projection (**Pji**) contenant la direction de projection (**Dji**), ces capteurs d'images étant disposés de manière que :
• au moins m éléments sensibles de chacun de ces capteurs d'images reçoivent la projection radiographique de la région à inspecter par le faisceau de rayons X issu du foyer (**Fj**) associé ;
• les plans de projection (**Pji**) pour les différents capteurs d'images sont distincts entre eux et non parallèles au plan de convoyage (**Pc**) ;
- on acquiert à l'aide de chacun des au moins trois capteurs d'images (**Cji**) linéaires, à chaque déplacement incrémental de chaque récipient selon la trajectoire (**T**), des images linéaires radiographiques de la région à inspecter selon un nombre choisi afin que pour chaque récipient, l'ensemble de la région à inspecter se trouve représentée complètement dans l'ensemble des images linéaires radiographiques ;
- on analyse pour chaque récipient, les au moins trois ensembles d'images linéaires radiographiques de la région à inspecter.

10. - Procédé selon l'une des revendications précédentes, **caractérisé en ce qu'**il consiste à mettre à la disposition du système informatique, un modèle géométrique a priori de la région à inspecter de la série de récipients, obtenu par :
- le modèle numérique de conception par ordinateur des récipients de la série ;
- ou le modèle numérique géométrique obtenu à partir de la mesure d'un ou de plusieurs récipients de la même série par un dispositif de mesure ;
- ou le modèle numérique géométrique généré par le système informatique à partir de valeurs saisies et/ou de dessins réalisés et/ou de formes sélectionnées par un opérateur sur une interface homme machine du système informatique.

11. - Procédé selon l'une des revendications précédentes, **caractérisé en ce qu'**il consiste à mettre à la disposition du système informatique la valeur du coefficient d'atténuation du verre constituant les récipients.

12. - Installation de mesure automatique de dimensions linéaires d'au moins une région à inspecter de récipients vides en verre (**2**) présentant chacun une paroi formant un goulot et un corps et délimitée par une surface interne et une surface externe, l'installation comportant :
- un dispositif (**11**) de transport des récipients dans une direction matérialisée par un vecteur (**T**) de déplacement, selon une trajectoire sensiblement rectiligne dans un plan de convoyage (**Pc**), les récipients parcourant un volume de convoyage (**Vt**) étendu dans la direction (**T**) ;
- au moins un foyer (**Fj**) d'un tube (**12**) générateur de rayons X situé en dehors du volume traversé (**Vt**), et créant un faisceau divergent de rayons X dirigé pour traverser au moins une région à inspecter comprenant au moins une partie du goulot et/ou une partie du corps du récipient ;
- au moins trois capteurs d'images (**Cji**), situés en dehors du volume de convoyage (**Vt**), de manière à recevoir des rayons X issus d'un foyer (**Fj**) associé, le ou les foyers (**Fj**) et les capteurs d'images (**Cji**) étant disposés de manière que chaque capteur d'images reçoive la projection radiographique de la région à inspecter par les rayons issus du foyer (**Fj**) lorsque le récipient traverse ces rayons, les directions de projection (**Dji**) de ces projections radiographiques étant différentes entre elles ;
- un système d'acquisition relié aux capteurs d'images (**Cji**), de manière à acquérir pour chaque récipient au cours de son déplacement, au moins trois images radiographiques de la région à inspecter, obtenues d'au moins trois projections radiographiques de la région à inspecter, avec des directions de projection différentes ;
- et un système informatique analysant les au moins trois images radiographiques, issues d'au moins les trois projections radiographiques différentes, de manière à construire pour chaque récipient, un modèle géométrique numérique de la région à inspecter, ledit modèle géométrique numérique contenant les coordonnées tridimensionnelles d'un ensemble de points, calculées à partir des au moins trois images radiographiques, cet ensemble de points appartenant à la surface interne et/ou externe de la paroi du récipient, avec au moins deux points situés dans un plan non orthogonal à une desdites directions de projection (**Dji**), ledit système informatique étant configuré pour déduire dudit modèle géométrique numérique au moins un diamètre interne du goulot mesuré sur le modèle dans un plan non orthogonal à une desdites directions de projection (**Dji**), et/ou au moins une épaisseur de la paroi du corps mesurée sur le modèle dans un plan non orthogonal à une desdites directions de projection (**Dji**).

13. - Installation selon la revendication 12, **caractérisée en ce qu'**elle comporte au moins deux foyers (**F1**, **F2**) de production de rayons X, positionnés séparément en deux positions distinctes et au moins trois capteurs d'images (**Cji**), sensibles aux rayons X et positionnés de manière que :
- chaque foyer émet son faisceau à travers au moins la région à inspecter pour atteindre au moins un capteur d'images (**Cji**) associé ;
- chaque capteur d'images (**Cji**) est associé à un foyer et reçoit les rayons X issus dudit foyer après avoir traversé la région à inspecter.

14. - Installation selon l'une des revendications 12 à 13, **caractérisé en ce qu'**elle comporte, au moins un foyer duquel est issu un faisceau de rayons X divergent d'ouverture supérieure ou égale à 120° ou au moins deux foyers desquels sont issus des faisceaux de rayons X divergents dont la somme des ouvertures est supérieure ou égale à 120°.

15. - Installation selon l'une des revendications 12 à 14, **caractérisée en ce qu'**elle comporte au moins un foyer disposé dans le plan de convoyage (**Pc**).

16. - Installation selon l'une des revendications 12 à 15, **caractérisée en ce qu'**elle comporte :
- d'un côté d'un plan sécant (**Ps**) au volume de convoyage et orthogonal au plan de convoyage (**Pc**), un foyer (**Fj**) duquel est issu un faisceau de rayons X divergent, de sorte que son faisceau traverse le plan sécant (**Ps**) et la région à inspecter ;
- du côté opposé par rapport au plan sécant (**Ps**), au moins un capteur d'images (**Cji**) associé audit foyer (**Fj**) pour recevoir les rayons X issus dudit foyer (**Fj**).

17. - Installation selon l'une des revendications 12 à 16, **caractérisée en ce qu'**elle comporte :
- d'un côté du plan de convoyage (**Pc**), un foyer (**Fj**) duquel est issu un faisceau de rayons X divergent, de sorte que son faisceau traverse le plan de convoyage (**Pc**) ;
- du côté opposé par rapport au plan de convoyage (**Pc**), au moins un capteur d'images (**Cji**) associé audit foyer (**Fj**) pour recevoir les rayons X issus dudit foyer (**Fj**).

18. - Installation selon l'une des revendications 12 à 17, **caractérisée en ce qu'**au moins un foyer et deux capteurs d'images (**Cji**) sont disposés de manière que les directions de projection (**Dji**) de la région inspectée qu'ils reçoivent possèdent entre elles un angle utile (α) supérieur ou égal à 45° et inférieur ou égal à 90° et, avantageusement supérieur ou égal à 60° et inférieur ou égal à 90°.

19. - Installation selon l'une des revendications 12 à 18, **caractérisée en ce qu'**au moins un foyer (**Fj**) et un capteur d'images (**Cji**) sont disposés de manière que, lorsqu'un récipient (**2**) traverse le champ des capteurs d'images, la direction de projection (**Dji**) de la région inspectée sur le capteur d'images (**Cji**) fait un angle d'ouverture (β) avec la direction de déplacement (**T**) compris entre 10° et 60°.

20. - Installation selon l'une des revendications 12 à 19, **caractérisée en ce qu'**elle comporte entre un et quatre foyers (**Fj**), issus d'un ou de plusieurs tubes générateurs de rayons X.

21. - Installation selon des revendications 12 à 20, **caractérisée en ce que** le nombre et la disposition des capteurs d'images (**Cji**) et des foyers associés, sont tels que pour chaque récipient (**2**) au cours de son déplacement, les projections radiographiques de la région à inspecter sur les capteurs d'images présentent entre quatre et quinze directions de projection différentes.

22. - Installation selon l'une des revendications 12 à 21, **caractérisée en ce que** :
- les capteurs d'images (**Cji**) sont de type linéaire et comportent chacun un réseau linéaire d'éléments sensibles aux rayons X, distribués selon une droite de support (**Lji**) définissant avec le foyer associé **(Fj**), un plan de projection (**Pji**) contenant la direction de projection (**Dji**), ces capteurs d'images étant disposés de manière que :
• au moins m éléments sensibles de chacun de ces capteurs d'images reçoivent la projection radiographique de la région à inspecter par le faisceau de rayons X issu du foyer (**Fj**) associé ;
• les plans de projection (**Pji**) pour les différents capteurs d'images sont distincts entre eux et non parallèles au plan de convoyage (**Pc**).

23. - Installation selon la revendication précédente, **caractérisée en ce qu'**au moins trois capteurs d'images (**Cji**) linéaires ont leurs droites de support (**Lji**) parallèles entre elles.

24. - Installation selon l'une des revendications 22 et 23, **caractérisée en ce que** au moins trois capteurs d'images (**Cji**) linéaires ont leurs droites de support (**Lji**) orthogonales au plan de convoyage (**Pc**).

25. - Installation selon l'une des revendications 12 à 24, **caractérisée en ce qu'**elle comprend un dispositif de mise à disposition pour le système informatique, de valeurs et/ou de tolérances pour les dimensions du goulot et/ou de valeur minimale d'épaisseur de verre pour la paroi du corps, et/ou d'au moins un modèle géométrique de référence d'un récipient.

## Patentansprüche

1. Verfahren zur Messung von Abmessungen mindestens einer zu untersuchenden Region von leeren Glasbehältern einer Serie (2), die jeweils eine Wand aufweisen, die einen Flaschenhals und einen Körper bildet und durch eine innere Oberfläche und eine äußere Oberfläche abgegrenzt ist, wobei das Verfahren besteht im:
- Auswählen mindestens einer zu untersuchenden Region, die mindestens einen Teil des Flaschenhalses und/oder einen Teil des Körpers des Behälters umfasst,
- Transportieren der auf ihren Boden gestellten Behälter in einer Förderebene (Pc) entlang eines ebenen Wegs mit einer Richtung, die durch einen Verlagerungsvektor (T) dargestellt wird, wobei diese Behälter im Laufe ihrer Verlagerung ein Fördervolumen (Vt) beschreiben,
- Positionieren, auf beiden Seiten der zu untersuchenden Region, mindestens eines Brennpunkts (Fj) einer Röntgenstrahl-Erzeugungsröhre und von Bildsensoren (Cji), die empfindlich gegenüber Röntgenstrahlen sind und jeweils den Röntgenstrahlen ausgesetzt werden, die von einem zugehörigen Brennpunkt (Fj) stammen, wobei diese Röntgenstrahlen, die mindestens die zu untersuchende Region durchquert haben, auf jedem Bildsensor eine Röntgenprojektion entlang einer Projektionsrichtung (Dji) erzeugen,
- Erfassen, mittels der Bildsensoren (Cji) für jeden Behälter im Laufe seiner Verlagerung, von mindestens drei Röntgenbildern der untersuchten Region, die von mindestens drei Röntgenprojektionen der zu untersuchenden Region erhalten werden, deren Projektionsrichtungen sich unterscheiden,
- Konstruieren, mittels eines Informatiksystems, eines digitalen geometrischen Modells der zu untersuchenden Region für jeden Behälter, ausgehend von mindestens drei Röntgenbildern, wobei das geometrische Modell die dreidimensionalen Koordinaten einer Menge von Punkten enthält, die ausgehend von den mindestens drei Röntgenbildern berechnet werden, wobei diese Menge von Punkten zu der inneren und/oder äußeren Oberfläche der Wand des Behälters gehört, wobei mindestens zwei Punkte sich in einer Ebene befinden, die nicht orthogonal zu einer der Projektionsrichtungen (Dji) ist,
- Ableiten mindestens eines Innendurchmessers des gemessenen Flaschenhalses auf dem Modell in einer Ebene, die nicht orthogonal zu einer der Projektionsrichtungen (Dji) ist, und/oder mindestens einer gemessenen Dicke der Wand des Körpers auf dem Modell in einer Ebene, die nicht orthogonal zu einer der Projektionsrichtungen (Dji) ist.

2. Verfahren nach Anspruch 1, **dadurch gekennzeichnet, dass** das digitale geometrische Modell der zu untersuchenden Region, welche die dreidimensionalen Koordinaten einer Menge von Punkten enthält, besteht aus:
- mindestens zwei dreidimensionalen Punkten des Raums, die jeweils zu einer inneren und/oder oberen Oberfläche der Wand des Behälters gehören und sich in einer Ebene befinden, die nicht orthogonal zu einer Projektionsrichtung (Dji) und nicht parallel zu der Verlagerungsrichtung (T) ist,
- und/oder mindestens einer Oberflächendarstellung der inneren und äußeren Oberflächen der Wand des Behälters, die Punkte enthält, die nicht zu einer Ebene gehören, die orthogonal zu einer Projektionsrichtung (Dji) ist, und nicht zu einer Ebene gehören, die parallel zu der Verlagerungsrichtung (T) ist,
- und/oder mindestens einer Sektion der zu untersuchenden Region entlang einer Ebene, die sich von einer Ebene unterscheidet, die orthogonal zu einer Projektionsrichtung (Dji) ist, und sich von einer Ebene unterscheidet, die parallel zu der Verlagerungsrichtung (T) ist.

3. Verfahren nach einem der vorhergehenden Ansprüche, **dadurch gekennzeichnet, dass** es darin besteht, als zu untersuchende Region mindestens eine definierte Zone auszuwählen, die sich zwischen zwei Ebenen erstreckt, die parallel zu der Förderebene (Pc) sind.

4. Verfahren nach einem der vorhergehenden Ansprüche, **dadurch gekennzeichnet, dass** es für die Messung des Flaschenhalses jedes Behälters im Messen der Längen einer Menge von Geradensegmenten als Innendurchmesser des Flaschenhalses besteht, wobei die Segmente:
• orthogonal zur Symmetrieachse des digitalen geometrischen Modells sind,
• die Symmetrieachse des digitalen geometrischen Modells kreuzen,
• sich auf mindestens zwei unterschiedlichen Höhen (ZG1, ZG2) in dem Flaschenhals des digitalen geometrischen Modells befinden,
• Richtungen aufweisen, die winklig um die Symmetrieachse des digitalen geometrischen Modells verteilt sind, wobei mindestens ein Segment nicht orthogonal zu den Projektionsrichtungen (Dij) ist,
• für jede Höhe eine Anzahl aufweisen, die größer als die Anzahl von Projektionsrichtungen (Dij) ist,
- und jedes Segment zwei Punkte verbindet, die zu der inneren Oberfläche des Flaschenhalses des digitalen geometrischen Modells gehören und die einander in Bezug auf die Symmetrieachse des digitalen geometrischen Modells des Behälters gegenüberliegen.

5. Verfahren nach Anspruch 4, **dadurch gekennzeichnet, dass** der Mindestdurchmesser in mehreren Höhen und mehreren Richtungen des Flaschenhalses des digitalen geometrischen Modells derart berechnet wird, dass die Räumungs- oder Durchmessermessung an der Öffnung bestimmt wird.

6. Verfahren nach einem der vorhergehenden Ansprüche, **dadurch gekennzeichnet, dass** es für die Messung der Dicken der Wand jedes Behälters darin besteht, eine Menge von Längen von Segmenten zu messen, die paarweise Punkte der äußeren Oberfläche und Punkte der inneren Oberfläche des digitalen geometrischen Modells jedes Behälters verbinden, wobei die gemessenen Segmente:
• im Wesentlichen orthogonal zu einer von der inneren und der äußeren Oberfläche, vorzugsweise zur äußeren Oberfläche, sind,
• sich auf mindestens 2 unterschiedlichen Höhen (HE1, HE2) in der zu untersuchenden Region befinden,
• Richtungen aufweisen, die Radien benachbart sind, die von der Symmetrieachse ausgehen und winklig um die Symmetrieachse des digitalen geometrischen Modells des Behälters verteilt sind, wobei mindestens ein Segment nicht orthogonal zu den Projektionsrichtungen (Dij) ist,
• für jede Höhe eine Anzahl aufweisen, die größer als das Doppelte der Anzahl von Projektionsrichtungen (Dij) ist.

7. Verfahren nach dem vorhergehenden Anspruch, **dadurch gekennzeichnet, dass** eine Mindestdicke auf der zu untersuchenden Region berechnet wird oder eine zusammenhängende Zone der Wand bestimmt wird, die eine Dicke aufweist, die kleiner als ein Toleranzschwellenwert ist und die "dünne Zone" genannt wird, und über die Qualität des Behälters in Abhängigkeit von der Mindestdicke oder der Oberfläche und/oder der Form der Zone der dünnen Zone entschieden wird.

8. Verfahren nach einem der vorhergehenden Ansprüche, **dadurch gekennzeichnet, dass** es darin besteht, Röntgenprojektionen der untersuchten Region eines Behälters derart auszuführen und zu erfassen, dass die Röntgenstrahlen, die von dem oder den Brennpunkten stammen und die Bildsensoren (Cji) erreichen, keine anderen Behälter durchqueren.

9. Verfahren nach einem der vorhergehenden Ansprüche, **dadurch gekennzeichnet, dass**:
- die Bildsensoren (Cji) vom linearen Typ sind und jeweils ein lineares Netz von Elementen beinhalten, die empfindlich gegenüber Röntgenstrahlen sind und entlang einer Traggeraden (Lji) verteilt sind, die mit dem zugehörigen Brennpunkt (Fj) eine Projektionsebene (Pji) definiert, welche die Projektionsrichtung (Dji) enthält, wobei diese Bildsensoren derart angeordnet sind, dass:
• mindestens m empfindliche Elemente von jedem dieser Bildsensoren die Röntgenprojektion der Region empfangen, die durch das Röntgenstrahlbündel zu untersuchen ist, das von dem zugehörigen Brennpunkt (Fj) stammt,
• die Projektionsebenen (Pji) für die verschiedenen Bildsensoren sich voneinander unterscheiden und nicht parallel zu der Förderebene (Pc) sind,
- mittels jedes der mindestens drei linearen Bildsensoren (Cji) bei jeder inkrementellen Verlagerung jedes Behälters entlang des Wegs (T) lineare Röntgenbilder der zu untersuchenden Region gemäß einer Anzahl erfasst werden, die so gewählt wird, dass für jeden Behälter die Gesamtheit der zu untersuchenden Region vollständig in der Menge der linearen Röntgenbilder dargestellt wird,
- für jeden Behälter die mindestens drei Mengen von linearen Röntgenbildern der zu untersuchenden Region analysiert werden.

10. Verfahren nach einem der vorhergehenden Ansprüche, **dadurch gekennzeichnet, dass** es darin besteht, dem Informatiksystem ein geometrisches Vormodell der zu untersuchenden Region der Serie von Behältern bereitzustellen, das erhalten wird durch:
- das digitale computerunterstützte Entwurfsmodell der Behälter der Serie,
- oder das digitale geometrische Modell, das ausgehend von der Messung von einem oder mehreren Behältern der gleichen Serie durch eine Messvorrichtung erhalten wird,
- oder das digitale geometrische Modell, das durch das Informatiksystem ausgehend von erfassten Werten und/oder ausgeführten Zeichnungen und/oder Formen erzeugt wird, die von einem Bediener auf einer Mensch-Maschine-Schnittstelle des Informatiksystems ausgewählt werden.

11. Verfahren nach einem der vorhergehenden Ansprüche, **dadurch gekennzeichnet, dass** es darin besteht, dem Informatiksystem den Wert des Schwächungskoeffizienten des Glases bereitzustellen, das die Behälter bildet.

12. Anlage zur automatischen Messung linearer Abmessungen mindestens einer zu untersuchenden Region von leeren Glasbehältern (2), die jeweils eine Wand aufweisen, die einen Flaschenhals und einen Körper bildet und von einer inneren Oberfläche und einer äußeren Oberfläche abgegrenzt ist, wobei die Anlage beinhaltet:
- eine Vorrichtung (11) zum Transport der Behälter in einer Richtung, die durch einen Verlagerungsvektor (T) dargestellt ist, entlang eines im Wesentlichen geraden Wegs in einer Förderebene (Pc), wobei die Behälter ein Fördervolumen (Vt) durchlaufen, das sich in die Richtung (T) erstreckt,
- mindestens einen Brennpunkt (Fj) einer Röntgenstrahl-Erzeugungsröhre (12), die sich außerhalb des durchquerten Volumens (Vt) befindet und ein divergierendes Röntgenstrahlbündel erzeugt, das gerichtet ist, um mindestens eine zu untersuchende Region zu durchqueren, die mindestens einen Teil des Flaschenhalses und/oder einen Teil des Körpers des Behälters umfasst,
- mindestens drei Bildsensoren (Cji), die sich außerhalb des Fördervolumens (Vt) befinden, derart dass Röntgenstrahlen, die von einem zugehörigen Brennpunkt (Fj) stammen, empfangen werden, wobei der oder die Brennpunkte (Fj) und die Bildsensoren (Cji) derart angeordnet sind, dass jeder Bildsensor die Röntgenprojektion der Region, die durch die Strahlen zu untersuchen ist, die von dem Brennpunkt (Fj) stammen, empfängt, wenn der Behälter diese Strahlen durchquert, wobei die Projektionsrichtungen (Dji) dieser Röntgenprojektionen sich voneinander unterscheiden,
- ein Erfassungssystem, das derart mit den Bildsensoren (Cji) verbunden ist, dass für jeden Behälter im Laufe seiner Verlagerung mindestens drei Röntgenbilder der zu untersuchenden Region erfasst werden, die von mindestens drei Röntgenprojektionen der zu untersuchenden Region mit unterschiedlichen Projektionsrichtungen erhalten werden,
- und ein Informatiksystem, das die mindestens drei Röntgenbilder analysiert, die von mindestens den drei unterschiedlichen Röntgenprojektionen stammen, derart dass für jeden Behälter ein digitales geometrisches Modell der zu untersuchenden Region konstruiert wird, wobei das digitale geometrische Modell die dreidimensionalen Koordinaten einer Menge von Punkten enthält, die ausgehend von den mindestens drei Röntgenbildern berechnet werden, wobei diese Menge von Punkten zu der inneren und/oder äußeren Oberfläche der Wand des Behälters gehört, wobei mindestens zwei Punkte sich in einer Ebene befinden, die nicht orthogonal zu einer der Projektionsrichtungen (Dji) ist, wobei das Informatiksystem dazu ausgestaltet ist, von dem digitalen geometrischen Modell mindestens einen Innendurchmesser des Flaschenhalses, der in dem Modell in einer Ebene gemessen wird, die nicht orthogonal zu einer der Projektionsrichtungen (Dji) ist, und/oder mindestens eine Dicke der Wand des Körpers abzuleiten, die auf dem Modell in einer Ebene gemessen wird, die nicht orthogonal zu einer der Projektionsrichtungen (Dji) ist.

13. Anlage nach Anspruch 12, **dadurch gekennzeichnet, dass** sie mindestens zwei Brennpunkte (F1, F2) zur Erzeugung von Röntgenstrahlen, die getrennt an zwei unterschiedlichen Positionen positioniert sind, und mindestens drei Bildsensoren (Cji) beinhaltet, die empfindlich gegenüber Röntgenstrahlen sind und derart positioniert sind, dass:
- jeder Brennpunkt sein Bündel durch mindestens die zu untersuchende Region emittiert, um mindestens einen zugehörigen Bildsensor (Cji) zu erreichen,
- jeder Bildsensor (Cji) einem Brennpunkt zugehörig ist und die Röntgenstrahlen, die von dem Brennpunkt stammen, empfängt, nachdem sie die zu untersuchende Region durchquert haben.

14. Anlage nach einem der Ansprüche 12 bis 13, **dadurch gekennzeichnet, dass** sie mindestens einen Brennpunkt, von dem ein divergierendes Röntgenstrahlbündel stammt, mit einer Apertur, die größer oder gleich 120° ist, oder mindestens zwei Brennpunkte beinhaltet, von denen divergierende Röntgenstrahlbündel stammen, deren Summe der Aperturen größer oder gleich 120° ist.

15. Anlage nach einem der Ansprüche 12 bis 14, **dadurch gekennzeichnet, dass** sie mindestens einen Brennpunkt beinhaltet, der in der Förderebene (Pc) angeordnet ist.

16. Anlage nach einem der Ansprüche 12 bis 15, **dadurch gekennzeichnet, dass** sie beinhaltet:
- auf einer Seite einer Schnittebene (Ps) zum Fördervolumen und orthogonal zur Förderebene (Pc), einen Brennpunkt (Fj), von dem ein divergierendes Röntgenstrahlbündel stammt, derart dass sein Bündel die Schnittebene (Ps) und die zu untersuchende Region durchquert,
- auf der in Bezug auf die Schnittebene (Ps) gegenüberliegenden Seite, mindestens einen Bildsensor (Cji), der dem Brennpunkt (Fj) zugehörig ist, um die Röntgenstrahlen zu empfangen, die von dem Brennpunkt (Fj) stammen.

17. Anlage nach einem der Ansprüche 12 bis 16, **dadurch gekennzeichnet, dass** sie beinhaltet:
- auf einer Seite der Förderebene (Pc), einen Brennpunkt (Fj), von dem ein divergierendes Röntgenstrahlbündel stammt, derart dass sein Bündel die Förderebene (Pc) durchquert,
- auf der in Bezug auf die Förderebene (Pc) gegenüberliegenden Seite, mindestens einen Bildsensor (Cji), der dem Brennpunkt (Fj) zugehörig ist, um die Röntgenstrahlen zu empfangen, die von dem Brennpunkt (Fj) stammen.

18. Anlage nach einem der Ansprüche 12 bis 17, **dadurch gekennzeichnet, dass** mindestens ein Brennpunkt und zwei Bildsensoren (Cji) derart angeordnet sind, dass die Projektionsrichtungen (Dji) der untersuchten Region, die sie empfangen, untereinander einen Nutzwinkel (α) besitzen, der größer oder gleich 45° und kleiner oder gleich 90° und vorzugsweise größer oder gleich 60° und kleiner oder gleich 90° ist.

19. Anlage nach einem der Ansprüche 12 bis 18, **dadurch gekennzeichnet, dass** mindestens ein Brennpunkt (Fj) und ein Bildsensor (Cji) derart angeordnet sind, dass, wenn ein Behälter (2) das Feld der Bildsensoren durchquert, die Projektionsrichtung (Dji) der untersuchten Region auf dem Bildsensor (Cji) einen Aperturwinkel (β) mit der Verlagerungsrichtung (T) bildet, der zwischen 10° und 60° beträgt.

20. Anlage nach einem der Ansprüche 12 bis 19, **dadurch gekennzeichnet, dass** sie zwischen einem und vier Brennpunkten (Fj) beinhaltet, die von einer oder mehreren Röntgenstrahl-Erzeugungsröhren stammen.

21. Anlage nach Anspruch 12 bis 20, **dadurch gekennzeichnet, dass** die Anzahl und die Anordnung der Bildsensoren (Cji) und der zugehörigen Brennpunkte derart sind, dass für jeden Behälter (2) im Laufe seiner Verlagerung die Röntgenprojektionen der zu untersuchenden Region auf den Bildsensoren zwischen vier und fünfzehn unterschiedliche Projektionsrichtungen aufweisen.

22. Anlage nach einem der Ansprüche 12 bis 21, **dadurch gekennzeichnet, dass**:
- die Bildsensoren (Cji) vom linearen Typ sind und jeweils ein lineares Netz von Elementen beinhalten, die empfindlich gegenüber Röntgenstrahlen sind und entlang einer Traggeraden (Lji) verteilt sind, die mit dem zugehörigen Brennpunkt (Fj) eine Projektionsebene (Pji) definiert, welche die Projektionsrichtung (Dji) enthält, wobei diese Bildsensoren derart angeordnet sind, dass:
• mindestens m empfindliche Elemente von jedem dieser Bildsensoren die Röntgenprojektion der Region empfangen, die durch das Röntgenstrahlbündel zu untersuchen ist, das von dem zugehörigen Brennpunkt (Fj) stammt,
• die Projektionsebenen (Pji) für die verschiedenen Bildsensoren sich voneinander unterscheiden und nicht parallel zur Förderebene (Pc) sind.

23. Anlage nach dem vorhergehenden Anspruch, **dadurch gekennzeichnet, dass** die Traggeraden (Lji) von mindestens drei linearen Bildsensoren (Cji) zueinander parallel sind.

24. Anlage nach einem der Ansprüche 22 und 23, **dadurch gekennzeichnet, dass** die Traggeraden (Lji) von mindestens drei linearen Bildsensoren (Cji) orthogonal zur Förderebene (Pc) sind.

25. Anlage nach einem der Ansprüche 12 bis 24, **dadurch gekennzeichnet, dass** sie eine Vorrichtung zur Bereitstellung von Werten und/oder Toleranzen für die Abmessungen des Flaschenhalses und/oder des Mindestwerts der Dicke des Glases für die Wand des Körpers und/oder mindestens eines geometrischen Bezugsmodells eines Behälters für das Informatiksystem umfasst.

## Claims

1. - A method for measuring dimensions of at least one region to be inspected of empty glass containers of a series (**2**) each having a wall forming a neck and a body and delimited by an inner surface and an outer surface, the method consists in:
- selecting at least one region to be inspected comprising at least part of the neck and/or part of the container body;
- transporting the containers placed on their bottom in a conveying plane (**Pc**) along a flat trajectory with a direction materialized by a displacement vector (**T**), these containers generating a conveying volume (**Vt**) during their displacement;
- positioning, on either side of the region to be inspected, at least one focus (**Fj**) of an X-ray generator tube and X-ray sensitive image sensors (**Cji**) and each exposed to X-rays obtained from an associated focus (**Fj**), these X-rays having passed through at least the region to be inspected producing on each image sensor a radiographic projection in a projection direction (**Dji**);
- acquiring using image sensors (**Cji**) for each container during its displacement, at least three radiographic images of the inspected region, obtained from at least three radiographic projections of the region to be inspected, the projection directions of which are different;
- constructing, using a computer system, a digital geometric model of the region to be inspected for each container, from at least three radiographic images, said geometric model containing the three-dimensional coordinates of a set of points, calculated from the at least three radiographic images, this set of points belonging to the inner and/or outer surface of the wall of the container, with at least two points located in a plane not orthogonal to one of the said projection directions (**Dji**),
- deducing at least one inner diameter of the neck measured on the model in a plane not orthogonal to one of the said projection directions (**Dji**), and/or at least one thickness of the wall of the body measured on the model in a plane not orthogonal to one of the said projection directions (**Dji**).

2. - The method according to claim 1, **characterized in that** the digital geometric model of the region to be inspected containing the three-dimensional coordinates of a set of points consists of:
- at least two three-dimensional points of the space each belonging to an inner and/or outer surface of the wall of the container and located in a plane not orthogonal to a projection direction (**Dji**), and not parallel to the displacement direction (**T**);
- and/or at least one surface representation of the inner and outer surfaces of the wall of the container containing points not belonging to a plane orthogonal to a projection direction (**Dji**), and not belonging to a plane parallel to the displacement direction (**T**);
- and/or at least one section of the region to be inspected, along a plane different from a plane orthogonal to a projection direction (**Dji**) and different from a plane parallel to the displacement direction (**T**).

3. - The method according to one of the preceding claims, **characterized in that** it consists in selecting as region to be inspected, at least one defined area extending between two parallel planes to the conveying plane (**Pc**).

4. - The method according to one of the preceding claims, **characterized in that** it consists for measuring the neck of each container, in measuring as the inner diameters of the neck, the lengths of a set of straight line segments, said segments being:
• orthogonal to the axis of symmetry of the digital geometric model;
• crossing the axis of symmetry of the digital geometric model;
• located at least at two distinct heights **(ZG1, ZG2)** in the neck of the digital geometric model;
• directions distributed angularly around the axis of symmetry of the digital geometric model, with at least one segment not orthogonal to the projection directions (**Dij**);
• for each height, in a number greater than the number of projection directions (**Dij**);
- and each segment connecting two points which belong to the inner surface of the neck of the digital geometric model and which are opposite with respect to the axis of symmetry of the digital geometric model of the container.

5. - The method according to claim 4, **characterized in that** the minimum diameter is calculated over several heights and several directions of the neck of the digital geometric model, so as to determine the measurement of broaching or diameter at the opening.

6. - The method according to one of the preceding claims, **characterized in that** it consists for the measurement of the thicknesses of the wall of each container, in measuring a set of lengths of segments joining in pairs points of the outer surface and points of the inner surface of the digital geometric model of each container, the measured segments being:
• substantially orthogonal to one of the inner and outer surfaces, preferably to the outer surface;
• located at least at 2 distinct heights **(HE1, HE2)** in the region to be inspected;
• of directions adjacent to radii starting from the axis of symmetry and distributed angularly around the axis of symmetry of the digital geometric model of the container, with at least one segment not orthogonal to the projection directions (**Dij**);
• for each height, in number greater than twice the number of projection directions **(Dij).**

7. - The method according to the preceding claim, **characterized in that** a minimum thickness is calculated over the region to be inspected, or else a related area of the wall having a thickness less than a tolerance threshold called "thin area" is determined and the quality of the container is decided according to the minimum thickness or the surface and/or the shape of the area of the thin area.

8. - The method according to one of the preceding claims, **characterized in that** it consists in producing and acquiring radiographic projections of the inspected region of a container so that the X-rays obtained from the focus or foci and reaching the image sensors (**Cji**) do not pass through other containers.

9. **-** The method according to one of the preceding claims, **characterized in that**:
- the image sensors (**Cji**) are of the linear type each including a linear array of X-ray sensitive elements, distributed along a support straight line (**Lji**) defining with the associated focus (**Fj**), a projection plane (**Pji**) containing the projection direction (**Dji**), these image sensors being arranged so that:
• at least m sensitive elements of each of these image sensors receive the radiographic projection of the region to be inspected by the X-ray beam from the associated focus (**Fj**);
• the projection planes (**Pji**) for the various image sensors are distinct from each other and not parallel to the conveying plane (**Pc**);
- using each of the at least three linear image sensors (**Cji**), at each incremental displacement of each container along the trajectory (**T**), radiographic linear images of the region to be inspected are acquired according to a selected number so that for each container, the entire region to be inspected is completely represented in all the linear radiographic images;
- the at least three sets of linear radiographic images of the region to be inspected are analyzed for each container.

10. -The method according to one of the preceding claims, **characterized in that** it consists in providing the computer system with an a priori geometric model of the region to be inspected of the series of containers, obtained by:
- the digital model for computer design of the containers of the series;
- or the digital geometric model obtained from the measurement of one or more containers of the same series by a measuring device;
- or the digital geometric model generated by the computer system from entered values and/or from completed drawings and/or selected shapes by an operator on a man machine interface of the computer system.

11. - The method according to one of the preceding claims, **characterized in that** it consists in providing the computer system with the value of the attenuation coefficient of the glass constituting the containers.

12. -A facility for automatically measuring linear dimensions of at least one region to be inspected of empty glass containers (2) each having a wall forming a neck and a body and delimited by an inner surface and an outer surface, the facility including:
- a device (**11**) for transporting the containers in a direction materialized by a displacement vector (**T**), along a substantially rectilinear trajectory in a conveying plane (**Pc**), the containers travelling through a conveying volume (**Vt**) extended in the direction (**T**);
- at least one focus (**Fj**) of an X-ray generator tube (**12**) located outside the traversed volume (**Vt**), and creating a divergent X-ray beam directed to pass through at least one region to be inspected comprising at least part of the neck and/or part of the container body;
- at least three image sensors (**Cji**), located outside the conveying volume (**Vt**), so as to receive X-rays obtained from an associated focus (**Fj**), the focus or foci (**Fj**) and the image sensors (**Cji**) being arranged so that each image sensor receives the radiographic projection of the region to be inspected by the rays obtained from the focus (**Fj**) when the container passes through these rays, the projection directions (**Dji**) of these radiographic projections being different from each other;
- an acquisition system connected to the image sensors (**Cji**), so as to acquire for each container during its displacement, at least three radiographic images of the region to be inspected, obtained from at least three radiographic projections of the region to be inspected, with different projection directions;
- and a computer system analyzing the at least three radiographic images, obtained from at least the three different radiographic projections, so as to build for each container, a digital geometric model of the region to be inspected, said digital geometric model containing the three-dimensional coordinates of a set of points, calculated from at least three radiographic images, this set of points belonging to the inner and/or outer surface of the wall of the container, with at least two points located in a plane not orthogonal to one of the said projection directions (**Dji**), said computer system being set up to deduce from said digital geometric model at least one inner diameter of the neck measured on the model in a plane not orthogonal to one of the said projection directions (**Dji**), and/or at least one thickness of the wall of the body measured on the model in a plane not orthogonal to one of the said projection directions (**Dji**).

13. -The facility according to claim 12, **characterized in that** it includes at least two foci (**F1**, **F2**) for producing X-rays, positioned separately in two distinct positions and at least three image sensors (**Cji**), sensitive to X-rays and positioned so that:
- each focus emits its beam through at least the region to be inspected to reach at least one associated image sensor (**Cji**);
- each image sensor (**Cji**) is associated with a focus and receives the X-rays obtained from said focus after passing through the region to be inspected.

14. -The facility according to one of claims 12 to 13, **characterized in that** it includes, at least one focus from which a divergent X-ray beam is obtained with an opening greater than or equal to 120° or at least two foci from which divergent X-ray beams are obtained the sum of the openings of which is greater than or equal to 120°.

15. -The facility according to one of claims 12 to 14, **characterized in that** it includes at least one focus arranged in the conveying plane (**Pc**).

16. -The facility according to one of claims 12 to 15, **characterized in that** it includes:
- on one side of a plane (**Ps**) intersecting with the conveying volume and orthogonal to the conveying plane (**Pc**), a focus (**Fj**) from which a beam of divergent X-rays is obtained, so that its beam passes through the intersecting plane (**Ps**) and the region to be inspected;
- on the opposite side with respect to the intersecting plane (**Ps**), at least one image sensor (**Cji**) associated with said focus (**Fj**) to receive the X-rays obtained from said focus (**Fj**).

17. -The facility according to one of claims 12 to 16, **characterized in that** it includes:
- on one side of the conveying plane (**Pc**), a focus (**Fj**) from which a divergent X-ray beam is obtained, so that its beam passes through the conveying plane (**Pc**);
- on the opposite side with respect to the conveying plane (**Pc**), at least one image sensor (**Cji**) associated with said focus (**Fj**) to receive the X-rays obtained from said focus (**Fj**).

18. -The facility according to one of claims 12 to 17, **characterized in that** at least one focus and two image sensors (**Cji**) are arranged so that the projection directions (**Dji**) of the inspected region which they receive have therebetween a useful angle (α) greater than or equal to 45° and less than or equal to 90° and, advantageously greater than or equal to 60° and less than or equal to 90°.

19. -The facility according to one of claims 12 to 18, **characterized in that** at least one focus (**Fj**) and an image sensor (**Cji**) are arranged so that when a container (**2**) passes through the field of the image sensors, the projection direction (**Dji**) of the inspected region on the image sensor (**Cji**) makes an opening angle (β) with the direction of displacement (**T**) comprised between 10° and 60°.

20. -The facility according to one of claims 12 to 19, **characterized in that** it includes between one and four foci (**Fj**), obtained from one or more X-ray generator tubes.

21. -The facility according to one of claims 12 to 20, **characterized in that** the number and the arrangement of the image sensors (**Cji**) and associated foci, are such that for each container (**2**) during its displacement, the radiographic projections of the region to be inspected on the image sensors have between four and fifteen different projection directions.

22. -The facility according to one of claims 12 to 21, **characterized in that**:
- the image sensors (**Cji**) are of the linear type and each include a linear array of X-ray sensitive elements, distributed along a support straight line (**Lji**) defining with the associated focus (**Fj**), a projection plane (**Pji**) containing the projection direction (**Dji**), these image sensors being arranged so that:
• at least m sensitive elements of each of these image sensors receive the radiographic projection of the region to be inspected by the X-ray beam obtained from the associated focus (**Fj**);
• the projection planes (**Pji**) for the various image sensors are distinct from each other and not parallel to the conveying plane (**Pc**).

23. -The facility according to the preceding claim, **characterized in that** at least three linear image sensors (**Cji**) have their support straight lines (**Lji**) parallel to each other.

24. -The facility according to one of claims 22 and 23, **characterized in that** at least three linear image sensors (**Cji**) have their support straight lines (**Lji**) orthogonal to the conveying plane (**Pc**).

25. -The facility according to one of claims 12 to 24, **characterized in that** it comprises a device for providing the computer system with values and/or tolerances for the dimensions of the neck and/or with a minimum value of glass thickness for the wall of the body, and/or with at least one geometric reference model of a container.
